# EUROPEAN PATENT APPLICATION

(11) **EP 4 843 846 A1**
(43) Date of publication of application: **25.11.2026**
(21) Application number: 26179055.4
(22) Date of filing: 15.05.2026
(51) Int. Cl.: B60T 13/74, F16D 55/226, F16D 65/18, F16D 121/24

(54) **ELECTRO-MECHANICAL BRAKE APPARATUS AND VEHICLE**

(30) Priority: 21.05.2025 CN 202510655891
(71) Applicant: HUAWEI TECHNOLOGIES CO., LTD., Shenzhen 518129 (CN)
(72) Inventor: HE, Yuhui, Shenzhen, 518129 (CN); WEI, Lishun, Shenzhen, 518129 (CN); XIA, Gongchuan, Shenzhen, 518129 (CN)
(74) Representative: Gill Jennings & Every LLP

(57) **Abstract**

The electro-mechanical brake apparatus (100) includes a caliper bracket (10), a caliper body (20), a brake motor (50), a transmission mechanism (41), and two brake pads (31). The caliper bracket (10) is configured to be connected to the caliper body (20) and mount the brake pads (31). The caliper body (20) is configured to be fastened to the brake motor (50) and accommodate the transmission mechanism (41). The brake motor (50) drives, through the transmission mechanism (41), the brake pads (31) to brake the vehicle. The caliper bracket (10) includes a first V-shaped frame (11) and a second V-shaped frame (12). The first V-shaped frame (11) is configured to be fastened to a vehicle frame. The brake pad (31) is mounted between two legs (111,121) of the two V-shaped frames (11,12). Two first legs (111) are connected through a first connection section (112), and the first leg (111) is fastened to a corresponding second leg (121) through an axial connection bridge (13a). The axial connection bridge (13a) includes a first side wall (131) and a second side wall (132) that face away from each other, and the first side wall (131) is close to the first connection section (112). In the electro-mechanical brake apparatus (100) in this application, the first side wall (131) of the axial connection bridge (13a) is provided close to the first connection section (112), to reduce moment exerted by the brake disc on the caliper bracket (10) and ensure reliable braking of the electro-mechanical brake apparatus (100) in this application.

## Description

### TECHNICAL FIELD

This application relates to the field of vehicle technologies, and in particular, to an electro-mechanical brake apparatus and a vehicle.

### BACKGROUND

An electro-mechanical brake (electro-mechanical brake, EMB) apparatus of a vehicle drives a brake actuator to brake through cooperation between a motor with a mechanical feed mechanism. During braking, friction force exerted by a brake pad on a brake disc may cause a caliper bracket to twist, affecting the braking effect of the electro-mechanical brake apparatus.

### SUMMARY

This application provides an electro-mechanical brake apparatus and a vehicle. A first side wall of an axial connection bridge is provided close to a first connection section, to reduce equivalent moment exerted by a brake disc on a second V-shaped frame during braking, and ensure structural strength of a caliper bracket.

According to a first aspect, this application provides an electro-mechanical brake apparatus. The electro-mechanical brake apparatus includes a caliper bracket, a caliper body, a brake motor, a transmission mechanism, and two brake pads. The caliper bracket is configured to be connected to the caliper body and configured to mount the two brake pads. The caliper body is configured to be fastened to the brake motor and configured to accommodate the transmission mechanism. The brake motor is configured to drive, through the transmission mechanism, the two brake pads to slide, to brake a brake disc of a vehicle.

The caliper bracket includes a first V-shaped frame and a second V-shaped frame. The first V-shaped frame and the second V-shaped frame are respectively arranged on two sides of the brake disc along a sliding direction of the brake pad. The first V-shaped frame is configured to be fastened to a vehicle frame. One of the two brake pads is mounted between two first legs of the first V-shaped frame and the other of the two brake pads is mounted between two second legs of the second V-shaped frame. The two first legs are connected through a first connection section. A surface of one of the first legs is configured to be fastened to a corresponding one of the second legs through one axial connection bridge.

Along an arrangement direction of the two first legs, one of axial connection bridges includes a first side wall and a second side wall that face away from each other. Along the arrangement direction of the two first legs, the first side wall, the second side wall, and the other of the axial connection bridges are sequentially arranged. Along a first direction, a minimum distance between the first side wall and the first connection section is less than a minimum distance between the second side wall and the first connection section. The first direction is perpendicular to both the arrangement direction of the two first legs and the sliding direction of the brake pad.

The electro-mechanical brake apparatus provided in this application is configured to be in transmission connection to a motor shaft of the brake motor and the brake pad through the transmission mechanism. The caliper bracket is configured to be fastened to the vehicle frame, and is slidably connected to the caliper body accommodating the transmission mechanism. The brake motor drives, through the motor shaft, the transmission mechanism to convert rotation of the motor shaft into sliding. The transmission mechanism is configured to push the two brake pads to slide relative to the caliper bracket, causing the brake pads to move toward the brake disc, to brake the brake disc. In a working process of the electro-mechanical brake apparatus in this application, the caliper bracket is configured to support the two brake pads and is configured to limit sliding directions of the two brake pads. In this way, reliable braking of the electro-mechanical brake apparatus in this application is ensured.

According to the electro-mechanical brake apparatus provided in this application, the first V-shaped frame and the second V-shaped frame of the caliper bracket are further respectively arranged on two sides of the brake disc along the sliding direction of the brake pad, and the two brake pads are respectively mounted between the two first legs and between the two second legs, to ensure braking effect of the two brake pads on the brake disc during braking. In a working process of the electro-mechanical brake apparatus in this application, the minimum distance between the first side wall and the first connection section is positively correlated with an effective moment arm of equivalent moment applied to the second V-shaped frame.

In the electro-mechanical brake apparatus in this application, the first leg is connected to the second leg through the axial connection bridge, and the first side wall of the axial connection bridge is closer to the first connection section than the second side wall of the axial connection bridge along the first direction, to reduce equivalent moment exerted by the brake disc on the second V-shaped frame during braking in a working process of the electro-mechanical brake apparatus in this application. This avoids a phenomenon in which the caliper bracket is subjected to excessively large force exerted by the brake disc on the second V-shaped frame, causing deformation between the first V-shaped frame and the second V-shaped frame to become inconsistent. In this way, leading-trailing eccentric wear of the brake pad is reduced, a pressure uniform distribution coefficient of the brake pad is increased, and reliable braking of the electro-mechanical brake apparatus in this application is ensured.

In an implementation, a distance between a center of the brake pad between the two first legs and the first connection section along the first direction is greater than or equal to a maximum distance between the first side wall and the first connection section.

In this implementation, in a working process of the electro-mechanical brake apparatus in this application, along the sliding direction of the brake pad, a surface that is of the brake pad between the two first legs and that faces the other brake pad is configured to be in contact with the brake disc. Equivalent friction force exerted by the brake disc on the brake pad passes through a geometric center of the brake pad. Along the first direction, the first side wall of the axial connection bridge is closer to the first connection section than the geometric center of the brake pad, so as to use the axial connection bridge to reduce impact, on the first leg, of equivalent moment exerted by the brake disc on the first V-shaped frame, thereby further ensuring structural strength of the caliper bracket and ensuring reliable braking of the electro-mechanical brake apparatus in this application.

In an implementation, one of the first leg connected to the axial connection bridge and the brake pad includes a protrusion, and the other of the first leg connected to the axial connection bridge and the brake pad includes a slide groove. Along the arrangement direction of the two first legs, the protrusion is configured to be embedded in the slide groove, to be slidably connected to the brake pad and the caliper bracket.

In this implementation, along the arrangement direction of the two first legs, two surfaces that are of the first legs and that are opposite to the brake pad each include a protrusion and a slide groove. The protrusion is embedded in the slide groove to implement sliding connection between the brake pad and the caliper bracket. In a working process of the electro-mechanical brake apparatus in this application, the slide groove is configured to limit a sliding direction of the brake pad, to ensure force uniformity of the brake pad and the brake disc. In this way, reliable braking of the electro-mechanical brake apparatus in this application is ensured.

In an implementation, the slide groove includes a first groove wall and a second groove wall. The second groove wall, the first groove wall, and the first connection section are sequentially arranged along the first direction. A size of the first groove wall is greater than a size of the second groove wall along the arrangement direction of the two first legs, and the size of the first groove wall is greater than or equal to a protrusion height of the protrusion along the arrangement direction of the two first legs. Along the first direction, the axial connection bridge includes a connection surface facing the first connection section, the connection surface intersects with the first side wall to form a first side edge, and the connection surface intersects with the second side wall to form a second side edge. A distance between the first side edge and the second side edge along the first direction is greater than or equal to one half of a distance between the second side edge and the first groove wall.

In this implementation, in a working process of the electro-mechanical brake apparatus in this application, a side wall connected to the first groove wall abuts against a side wall forming the protrusion, and force exerted by the brake disc on the brake pad is transferred to the first leg through abutment between the side wall connected to the first groove wall and the side wall forming the protrusion. A distance between the first side edge and the first connection section along the first direction is less than or equal to a sum of one half of the distance between the second side edge and the first groove wall and a minimum distance between the first groove wall and the first connection section.

In an implementation, along the arrangement direction of the two first legs, a protrusion height of the protrusion is greater than or equal to a groove depth of the slide groove. Along the first direction, the axial connection bridge includes a connection surface facing the first connection section, the connection surface intersects with the first side wall to form a first side edge, and the connection surface intersects with the second side wall to form a second side edge. The distance between the first side edge and the second side edge along the first direction is greater than or equal to one half of a minimum distance between the second side edge and the protrusion.

In this implementation, in a working process of the electro-mechanical brake apparatus in this application, a groove bottom of the slide groove abuts against the protrusion, and force exerted by the brake disc on the brake pad is transferred to the first leg and the second leg through abutment between the groove bottom of the slide groove and the protrusion. A minimum distance between the first side edge and the first connection section along the first direction is less than or equal to a sum of one half of a maximum distance between the second side edge and the protrusion and a minimum distance between the protrusion and the first connection section. In a working process of the electro-mechanical brake apparatus in this application, equivalent moment exerted by the brake disc on the second V-shaped frame during braking is reduced. This avoids a phenomenon in which the caliper bracket is subjected to excessively large force exerted by the brake disc on the second V-shaped frame, causing deformation between the first V-shaped frame and the second V-shaped frame to become inconsistent. In this way, leading-trailing eccentric wear of the brake pad is reduced, and reliable braking of the electro-mechanical brake apparatus in this application is ensured.

In an implementation, along the first direction, the axial connection bridge includes a connection surface facing the first connection section, the connection surface intersects with the first side wall to form a first side edge, and the connection surface intersects with the second side wall to form a second side edge. The second side edge, the slide groove, and the first side edge are sequentially arranged along the first direction.

In this implementation, the first side edge is lower than the slide groove along the first direction, to further reduce the minimum distance between the first side wall and the first connection section, thereby further ensuring structural strength of the caliper bracket and ensuring reliable braking of the electro-mechanical brake apparatus in this application.

In an implementation, along the first direction, the axial connection bridge includes a second connection surface that faces away from the first connection section, a middle segment of the second connection surface is arc-shaped along the arrangement direction of the two first legs, and a curvature of the middle segment of the second connection surface is greater than or equal to a curvature of the brake disc.

In this implementation, the middle segment of the second connection surface that is of the axial connection bridge and that is away from the first connection section is arc-shaped, and the curvature of the middle segment of the second connection surface is greater than the curvature of the brake disc, so that a geometric shape of the axial connection bridge adapts to external space of the brake disc, and space occupied by the axial connection bridge in a radial direction of the brake disc is reduced, thereby facilitating miniaturization of the electro-mechanical brake apparatus in this application.

In an implementation, the second connection surface includes two spaced edge regions along the arrangement direction of the two first legs. One of the two edge regions is connected to the first side wall, and the other of the two edge regions is connected to the second side wall. Along the first direction, each of the edge regions includes a protruding portion extending in a direction away from the first connection section.

In this implementation, along the arrangement direction of the two first legs, the middle segment of the second connection surface is recessed relative to the two edge regions of the second connection surface, to reduce a weight of the axial connection bridge while ensuring connection strength of the first V-shaped frame and the second V-shaped frame. This avoids a case in which bending moment of the caliper bracket is excessively large because the axial connection bridge is excessively heavy. In this way, structural strength of the caliper bracket is ensured, and reliable braking of the electro-mechanical brake apparatus in this application is ensured.

In an implementation, a surface area of the first side wall is greater than or equal to a surface area of the second side wall.

In this implementation, along the arrangement direction of the two first legs, a cross-sectional area of one end that is of the axial connection bridge and that is close to another axial connector is less than or equal to a cross-sectional area of the other end of the axial connection bridge. This ensures connection strength of the axial connection bridge to the first V-shaped frame and the second V-shaped frame, thereby ensuring structural strength of the caliper bracket and ensuring reliable braking of the electro-mechanical brake apparatus in this application.

In an implementation, along the arrangement direction of the two first legs, a cross-sectional area of a middle segment of the axial connection bridge is less than or equal to the surface area of the first side wall; or the cross-sectional area of the middle segment of the axial connection bridge is less than or equal to the surface area of the second side wall.

In this implementation, along the arrangement direction of the two first legs, the cross-sectional area of the middle segment of the axial connection bridge is less than or equal to the surface area of the first side wall or the second side wall, to reduce the weight of the axial connection bridge. This avoids a case in which bending moment of the caliper bracket is excessively large because the axial connection bridge is excessively heavy. In this way, structural strength of the caliper bracket is ensured, and reliable braking of the electro-mechanical brake apparatus in this application is ensured.

In an implementation, along the first direction, the first leg includes a first segment and a second segment that are connected. The first segment is connected to the axial connection bridge, and the second segment is connected to the first connection section. Along the first direction and toward a direction of the first connection section, a size of the second segment decreases along the arrangement direction of the two first legs.

In this implementation, along the first direction, a surface that is of the first segment and that is away from the second segment is configured to be connected to the axial connection bridge. Along the arrangement direction of the two first legs, a size of an end that is of the second segment and that is connected to the first segment is greater than a size of an end that is of the second segment and that is connected to the first connection section. In this way, a weight and a size of the first V-shaped frame are reduced while a connection area between the first leg and the axial connection bridge is ensured, thereby facilitating miniaturization of the electro-mechanical brake apparatus in this application.

In an implementation, along the arrangement direction of the two first legs, the first leg includes a third side wall and a fourth side wall that face away from each other, and the third side wall, the fourth side wall, and the first connection section are sequentially arranged. Along the sliding direction of the brake pad, an end face that is of the first leg and that is away from the second leg includes a weight reduction groove. Along the arrangement direction of the two first legs, a distance between the weight reduction groove and the third side wall is less than or equal to a distance between the weight reduction groove and the fourth side wall.

In this implementation, along the sliding direction of the brake pad, a weight reduction groove is provided in a central area that is of the first leg and that is away from the end face of the second leg, to reduce a weight of the first leg while ensuring connection strength between the caliper bracket and the vehicle frame. The fourth side wall is configured to abut against a side wall of the brake pad, and a distance between a groove wall of the weight reduction groove and the fourth side wall is large, so that in a working process of the electro-mechanical brake apparatus in this application, structural strength of the first leg facing a side of the brake pad is increased, thereby ensuring reliable braking of the electro-mechanical brake apparatus in this application.

In an implementation, the first connection section includes two positioning holes, the two positioning holes are arranged at an interval along the arrangement direction of the two first legs, the two positioning holes are configured to be fastened to the vehicle frame, and a distance between the two positioning holes is less than or equal to a size of the first connection section.

In this implementation, along the first direction, one end of the first leg is connected to a corresponding second leg through the axial connection bridge, and the other end of the first leg is fastened to the vehicle frame through the positioning hole. Middle segments of the two first legs are connected through the first connection section. The distance between the two positioning holes is small, to adapt to a size of space of the brake disc close to a geometric axis while ensuring connection strength between the caliper bracket and the vehicle frame, thereby facilitating miniaturization of the electro-mechanical brake apparatus in this application.

In an implementation, along the sliding direction of the brake pad, a size of the first leg is greater than or equal to a size of the second leg.

In this implementation, because the first leg is fastened to the vehicle frame, along the sliding direction of the brake pad, the size of the first leg is greater than the size of the second leg, to improve connection strength between the caliper bracket and the vehicle frame and further reduce a weight of the second V-shaped frame, thereby ensuring structural strength of the caliper bracket and ensuring reliable braking of the electro-mechanical brake apparatus in this application.

In an implementation, along the arrangement direction of the two first legs, a width size of the first V-shaped frame is greater than or equal to a width size of the second V-shaped frame.

In this implementation, along the arrangement direction of the two first legs, a distance between two end faces that are of the first leg and that face away from each other is greater than or equal to a distance between two end faces that are of the second leg and that face away from each other, to increase structural strength of the first V-shaped frame and reduce the weight of the second V-shaped frame, thereby ensuring connection strength between the caliper bracket and the vehicle frame and ensuring reliable braking of the electro-mechanical brake apparatus in this application.

In an implementation, along the sliding direction of the brake pad, the first V-shaped frame includes a first end face facing the second V-shaped frame, and along the sliding direction of the brake pad, a projected area of the second V-shaped frame on the first end face is less than a surface area of the first end face.

In this implementation, a volume of the second V-shaped frame is less than a volume of the first V-shaped frame, to improve connection strength between the caliper bracket and the vehicle frame and further reduce a weight of the second V-shaped frame, thereby ensuring structural strength of the caliper bracket and ensuring reliable braking of the electro-mechanical brake apparatus in this application.

In an implementation, along the sliding direction of the brake pad, the caliper body includes a main body portion, a connection portion, and a claw portion that are sequentially connected. The main body portion is configured to accommodate the transmission mechanism and configured to mount one of the brake pads. A surface that is of the claw portion and that faces the main body portion is configured to enclose the other of the brake pads. The main body portion, the first V-shaped frame, the second V-shaped frame, and the claw portion are sequentially arranged along the sliding direction of the brake pad.

In this implementation, the main body portion, one brake pad, the other brake pad, and the claw portion are sequentially arranged along the sliding direction of the brake pad. In a working process of the electro-mechanical brake apparatus in this application, the transmission mechanism is configured to push one brake pad to slide, and the claw portion is configured to push the other brake pad to slide. In this way, the two brake pads move toward the brake disc, to implement braking of the electro-mechanical brake apparatus in this application.

In an implementation, the axial connection bridge, the connection portion, and the other axial connection bridge are sequentially arranged along the arrangement direction of the two first legs.

In this implementation, along the arrangement direction of the two first legs, the two axial connection bridges are respectively arranged on two opposite sides of the connection portion, to reduce space occupied by the caliper body along the arrangement direction of the two first legs, thereby facilitating miniaturization of the electro-mechanical brake apparatus in this application.

In an implementation, along the arrangement direction of the two first legs, a side wall on at least one side of the connection portion includes a groove. The groove extends toward the main body portion or the claw portion along the sliding direction of the brake pad. Along the sliding direction of the brake pad, an extension size of the groove is greater than or equal to a distance between the main body portion and the claw portion.

In this implementation, a groove is provided on a side wall on at least one side of the connection portion, to reduce a weight of the connection portion while ensuring bending strength of the connection portion, thereby ensuring reliable braking of the electro-mechanical brake apparatus in this application. Along the sliding direction of the brake pad, one end of the groove extends at least to a junction between the connection portion and the claw portion, and the other end extends at least to a junction between the connection portion and the main body portion, to further reduce the weight of the connection portion and ensure reliable braking of the electro-mechanical brake apparatus in this application.

In an implementation, a cross-sectional area of the claw portion decreases along the sliding direction of the brake pad and in a direction away from the main body portion.

In this implementation, a cross-sectional shape of the claw portion is a trapezoid, and a cross-sectional area of a side that is of the claw portion and that is close to the main body portion is large, to reduce a weight of the claw portion while ensuring bending strength of the claw portion and ensuring a contact area with the brake pad, thereby ensuring reliable braking of the electro-mechanical brake apparatus in this application.

In an implementation, there are two connection portions and two claw portions. Along the sliding direction of the brake pad, each claw portion is connected to the main body portion through one of the connection portions. The two claw portions are spaced apart from each other along the arrangement direction of the two first legs.

In this implementation, in a working process of the electro-mechanical brake apparatus in this application, the brake pad mounted on the second V-shaped frame slides toward the brake disc through the two claw portions, to ensure reliable braking of the electro-mechanical brake apparatus in this application.

In an implementation, each claw portion includes a connection hole. The connection hole is configured to be connected to the brake pad. A minimum distance between the first connection section and a central connection line between connection holes of the two claw portions is greater than or equal to the minimum distance between the first side wall and the first connection section.

In this implementation, each claw portion is fastened to one brake pad through one connection hole, so that the brake pad is pushed to slide toward or away from the brake disc. Along the first direction, the central connection line between the two connection holes are farther away from the first connection section than the first side wall. In this way, when the electro-mechanical brake apparatus in this application is working, the two claw portions can cooperate with the caliper bracket to reduce force exerted by the brake disc on the second V-shaped frame through the brake pad, thereby ensuring reliable braking of the electro-mechanical brake apparatus.

According to a second aspect, an embodiment of this application provides a vehicle, including a plurality of wheels and a plurality of electro-mechanical brake apparatuses provided in the first aspect. Each of the electro-mechanical brake apparatuses is configured to brake one wheel.

The vehicle in this application includes the electro-mechanical brake apparatus provided in any one of the foregoing implementations. A first side wall of an axial connection bridge is provided close to a first connection section, to reduce equivalent moment exerted by a brake disc on a second V-shaped frame during braking, and ensure structural strength of a caliper bracket.

### BRIEF DESCRIPTION OF DRAWINGS

To describe technical solutions in this application more clearly, the following briefly describes accompanying drawings used in describing implementations. Clearly, the accompanying drawings in the following descriptions are merely some implementations of this application, and a person of ordinary skill in the art may still derive other drawings from these accompanying drawings without creative efforts.
FIG. 1 is a diagram of a partial appearance structure of a wheel of a vehicle according to an embodiment of this application;
FIG. 2 is a partial cross-sectional view of a wheel of a vehicle according to an embodiment of this application;
FIG. 3 is a cross-sectional view of an electro-mechanical brake apparatus according to an embodiment of this application;
FIG. 4 is another cross-sectional view of an electro-mechanical brake apparatus according to an embodiment of this application;
FIG. 5 is a diagram of an outline structure of an electro-mechanical brake apparatus at a caliper body according to an embodiment of this application;
FIG. 6 is a cross-sectional view of an electro-mechanical brake apparatus at a caliper body according to an embodiment of this application;
FIG. 7 is a cross-sectional view of an electro-mechanical brake apparatus at a reducer according to an embodiment of this application;
FIG. 8 is a partial exploded view of a structure of an electro-mechanical brake apparatus at a caliper body according to an embodiment of this application;
FIG. 9 is a cross-sectional view of an electro-mechanical brake apparatus at a caliper body according to an embodiment of this application;
FIG. 10 is a diagram of an outline structure of an electro-mechanical brake apparatus at a caliper bracket according to an embodiment of this application;
FIG. 11 is a front view of a structure of an electro-mechanical brake apparatus at a caliper bracket according to an embodiment of this application;
FIG. 12 is another front view of a structure of an electro-mechanical brake apparatus at a caliper bracket according to an embodiment of this application;
FIG. 13 is a diagram of an outline structure of a caliper bracket in an electro-mechanical brake apparatus according to an embodiment of this application;
FIG. 14 is a cross-sectional view of a caliper bracket in an electro-mechanical brake apparatus according to an embodiment of this application;
FIG. 15 is a partial cross-sectional view of a caliper bracket in an electro-mechanical brake apparatus according to an embodiment of this application;
FIG. 16 is a cross-sectional view of an electro-mechanical brake apparatus at a caliper bracket according to an embodiment of this application;
FIG. 17 is a partial cross-sectional view of an electro-mechanical brake apparatus at a caliper bracket according to an embodiment of this application;
FIG. 18 is a partial cross-sectional view of an electro-mechanical brake apparatus at a caliper bracket in one embodiment according to an embodiment of this application;
FIG. 19 is another partial cross-sectional view of an electro-mechanical brake apparatus at a caliper bracket in one embodiment according to an embodiment of this application;
FIG. 20 is a partial cross-sectional view of an electro-mechanical brake apparatus at a caliper bracket in another embodiment according to an embodiment of this application;
FIG. 21 is another partial cross-sectional view of an electro-mechanical brake apparatus at a caliper bracket in another embodiment according to an embodiment of this application;
FIG. 22 is a diagram of a partial outline structure of an electro-mechanical brake apparatus at a caliper bracket according to an embodiment of this application;
FIG. 23 is another cross-sectional view of an electro-mechanical brake apparatus at a caliper bracket according to an embodiment of this application;
FIG. 24 is another partial cross-sectional view of an electro-mechanical brake apparatus at a caliper bracket according to an embodiment of this application;
FIG. 25 is a front view of a structure of an electro-mechanical brake apparatus at a caliper bracket according to an embodiment of this application;
FIG. 26 is a partial front view of a structure of an electro-mechanical brake apparatus at a caliper bracket according to an embodiment of this application;
FIG. 27 is a front view of a structure of a first V-shaped frame of a caliper bracket in an electro-mechanical brake apparatus according to an embodiment of this application;
FIG. 28 is a partial front view of a structure of a first V-shaped frame of a caliper bracket in an electro-mechanical brake apparatus according to an embodiment of this application;
FIG. 29 is a diagram of a partial outline structure of a first V-shaped frame of a caliper bracket in an electro-mechanical brake apparatus according to an embodiment of this application;
FIG. 30 is a cross-sectional view of a caliper bracket in an electro-mechanical brake apparatus according to an embodiment of this application;
FIG. 31 is a partial cross-sectional view of a caliper bracket in an electro-mechanical brake apparatus according to an embodiment of this application;
FIG. 32 is a bottom view of a structure of a caliper bracket in an electro-mechanical brake apparatus according to an embodiment of this application;
FIG. 33 is a diagram of another outline structure of an electro-mechanical brake apparatus at a caliper body according to an embodiment of this application;
FIG. 34 is a diagram of an outline structure of a caliper body in an electro-mechanical brake apparatus according to an embodiment of this application;
FIG. 35 is a cross-sectional view of a caliper body in an electro-mechanical brake apparatus according to an embodiment of this application;
FIG. 36 is a diagram of a side structure of a caliper body in an electro-mechanical brake apparatus according to an embodiment of this application;
FIG. 37 is a diagram of another outline structure of a caliper body in an electro-mechanical brake apparatus according to an embodiment of this application;
FIG. 38 is another cross-sectional view of a caliper body in an electro-mechanical brake apparatus according to an embodiment of this application; and
FIG. 39 is a front view of a structure of an electro-mechanical brake apparatus at a caliper body according to an embodiment of this application.

### DESCRIPTION OF EMBODIMENTS

The following describes technical solutions in embodiments of this application with reference to accompanying drawings in embodiments of this application. It is clear that the described embodiments are merely some but not all of embodiments of this application. All other embodiments obtained by a person of ordinary skill in the art based on embodiments of this application without creative efforts shall fall within the protection scope of this application.

The vehicle provided in this application may include a plurality of electro-mechanical brake apparatuses, and each electro-mechanical brake apparatus is disposed corresponding to one wheel. The vehicle further includes a brake pedal, and the brake pedal is configured to control the plurality of electro-mechanical brake apparatuses to drive brake pads to move toward or away from brake discs of wheels.

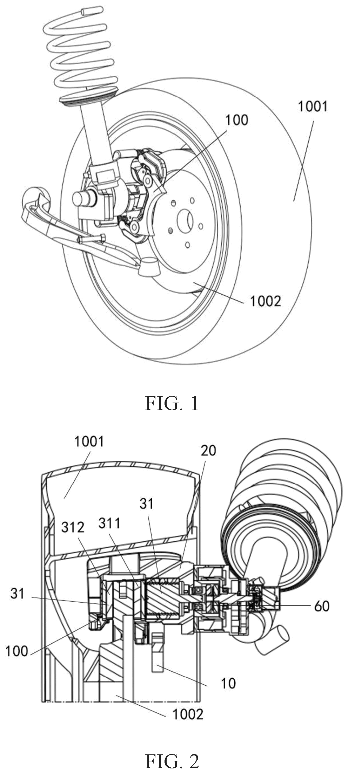

FIG. 1 is a diagram of a partial appearance structure of a wheel of a vehicle according to an embodiment of this application.

As shown in FIG. 1, a brake disc 1002 is disposed on a wheel 1001, and the brake disc 1002 is coaxially fastened to a hub of the wheel 1001. The wheel 1001 rotates relative to a vehicle frame, and the brake disc 1002 synchronously rotates with the wheel 1001 relative to the vehicle frame. As shown in FIG. 1, an outer diameter of the brake disc 1002 is less than an inner diameter of an inner rim of the wheel, and the brake disc 1002 is accommodated in the inner rim of the wheel 1001.

An electro-mechanical brake apparatus 100 provided in this application is fastened to the vehicle frame. The electro-mechanical brake apparatus 100 at least partially extends into the inner rim of the wheel 1001, and cooperates with the brake disc 1002 to brake the wheel 1001.

FIG. 2 is a partial cross-sectional view of the wheel of the vehicle according to an embodiment of this application.

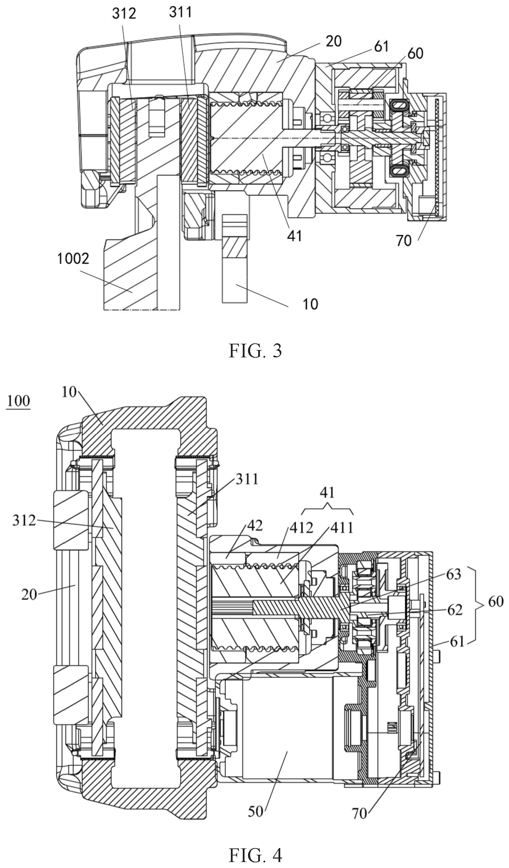

As shown in FIG. 2, the electro-mechanical brake apparatus 100 provided in this application includes a caliper bracket 10, a caliper body 20, a brake pad 31, a transmission mechanism 41, and a brake motor 50. For a connection relationship between the transmission mechanism 41, the brake motor 50, and the caliper body 20, refer to FIG. 3. The caliper bracket 10 is configured to be fastened to the vehicle frame and configured to be connected to the caliper body 20, and the brake motor 50 is fastened to the caliper body 20. In an embodiment, the caliper body 20 is slidably connected to the caliper bracket 10, and the brake motor 50 slides synchronously with the caliper body 20 relative to the caliper bracket 10. In some embodiments, the caliper body 20 is slidably connected to the caliper bracket 10 through a through hole and a sliding rod. To be specific, the caliper body 20 is provided with one of the through hole and the sliding rod, and the caliper bracket 10 is provided with the other one of the through hole and the sliding rod. The sliding rod axially slides in the through hole, to implement relative sliding between the caliper body 20 and the caliper bracket 10.

In this embodiment of this application, a sliding direction of the caliper body 20 relative to the caliper bracket 10 is parallel to an axial direction of the brake disc 1002, and the brake motor 50 is configured to be slidably connected to the vehicle frame along an axial direction of the wheel 1001. In correspondence to the embodiment of cooperation between the through hole and the sliding rod, both an axial direction of the through hole and an axis of the sliding rod are parallel to the axial direction of the brake disc 1002.

The caliper bracket 10 is configured to mount the brake pad 31, and the caliper body 20 is configured to be fastened to one brake motor 50 and configured to accommodate one transmission mechanism 41. As shown in FIG. 2, there are two brake pads 31, and the two brake pads 31 are respectively arranged on two sides of the brake disc 1002 in the axial direction of the brake disc 1002. The two brake pads 31 respectively face two outer surfaces of the brake disc 1002 that face away from each other.

As shown in FIG. 2, the brake motor 50 in the electro-mechanical brake apparatus 100 is configured to drive the two brake pads 31 to slide along the axial direction of the wheel 1001 to abut against the brake disc 1002. In this embodiment of this application, the brake motor 50 is configured to drive the brake pad 31 to move toward or away from the brake disc 1002 of the vehicle. The brake motor 50 drives, through the transmission mechanism 41, the two brake pads 31 to slide oppositely and to be in contact with two outer surfaces of the brake disc 1002 that face away from each other, to generate friction force to brake the brake disc 1002.

For ease of description, along the axial direction of the brake disc 1002, in this application, a brake pad 31 that is in the two brake pads 31 and that is close to the transmission mechanism 41 is defined as a first brake pad 311, and a brake pad 31 that is in the two brake pads 31 and that is away from the transmission mechanism 41 is defined as a second brake pad 312.

Refer to FIG. 3 and FIG. 4. FIG. 3 is a cross-sectional view of the electro-mechanical brake apparatus 100 according to an embodiment of this application. FIG. 4 is another cross-sectional view of the electro-mechanical brake apparatus 100 according to an embodiment of this application.

As shown in FIG. 3 and FIG. 4, the electro-mechanical brake apparatus 100 in this application further includes the caliper body 20, the transmission mechanism 41, and the brake motor 50. The transmission mechanism 41 may rotate around its axis relative to the caliper body 20. Specifically, in a working process of the electro-mechanical brake apparatus 100 in this application, the brake motor 50 drives the transmission mechanism 41 to rotate, to push the two brake pads 31 to slide oppositely and contact the brake disc 1002, thereby braking the brake disc 1002. An axis of the transmission mechanism 41 is parallel to an axis of the brake disc 1002.

In an embodiment, the electro-mechanical brake apparatus 100 in this application further includes a reducer 60. The reducer 60 is configured to be in transmission connection to the brake motor 50 and the transmission mechanism 41. The reducer 60 is configured to adjust a rotational speed and torque of driving force output by the brake motor 50, and transfer adjusted driving force to the transmission mechanism 41. The caliper body 20 is configured to be fastened to the reducer 60 and configured to accommodate the transmission mechanism 41. The brake motor 50 is fastened to the caliper body 20 through the reducer 60. Along an axial direction of the transmission mechanism 41, the caliper body 20 is closer to the wheel 1001 than the reducer 60.

The transmission mechanism 41 is configured to be in transmission connection to the reducer 60 and drive the two brake pads 31. Specifically, the two brake pads 31 are configured to be slidably connected to the caliper bracket 10, the transmission mechanism 41 is configured to drive the first brake pad 311 to slide relative to the caliper bracket 10, and the second brake pad 312 is configured to be fastened to or slidably connected to the caliper body 20. In other words, the second brake pad 312, the first brake pad 311, the transmission mechanism 41, and the reducer 60 are sequentially arranged along the axial direction of the transmission mechanism 41.

In this embodiment, the reducer 60 includes a housing 61, and the housing 61 of the reducer 60 is fastened to the caliper body 20. An arrangement direction of the reducer 60 and the caliper body 20 is parallel to the axial direction of the transmission mechanism 41. The housing 61 of the reducer 60 is configured to accommodate a circuit board 70 and a gear set 62, and the housing 61 of the reducer 60 is further configured to be fastened to the brake motor 50. In the illustration shown in FIG. 4, along the arrangement direction of the reducer 60 and the caliper body 20, the brake motor 50 is fastened to a side that is of the housing 61 of the reducer 60 and that faces the caliper body 20, and is spaced apart from the brake pad 31. Along a direction perpendicular to the arrangement direction of the reducer 60 and the caliper body 20, the brake motor 50 and the transmission mechanism 41 in the caliper body 20 are arranged at an interval.

In other words, along the arrangement direction of the reducer 60 and the caliper body 20, the brake motor 50 and the caliper body 20 are fastened on a same side of the housing 61 of the reducer 60, so that an internal mechanism of the electro-mechanical brake apparatus 100 is arranged more compactly, thereby reducing an overall volume and facilitating miniaturization of the electro-mechanical brake apparatus 100 in this application.

The caliper body 20 is configured to accommodate the transmission mechanism 41. The caliper body 20 is further configured to drive the housing 61 of the reducer 60 and slide along the axial direction of the brake disc 1002 relative to the caliper bracket 10. The reducer 60 is configured to be in transmission connection to the transmission mechanism 41 and the brake motor 50. A motor shaft of the brake motor 50 extends into the housing 61 of the reducer 60, and is in transmission connection to the gear set 62 of the reducer 60. In other words, the brake motor 50 is configured to drive the gear set 62 of the reducer 60 to rotate, to push the brake pad 31 and drive the caliper body 20.

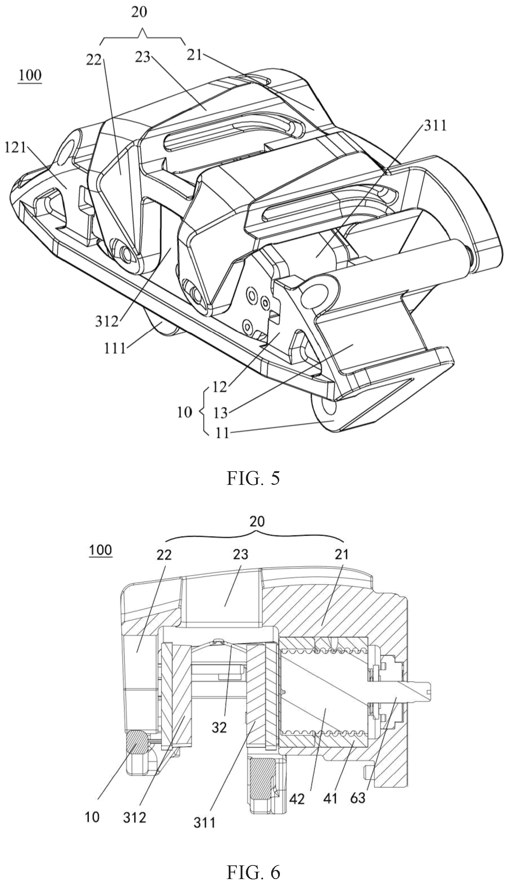

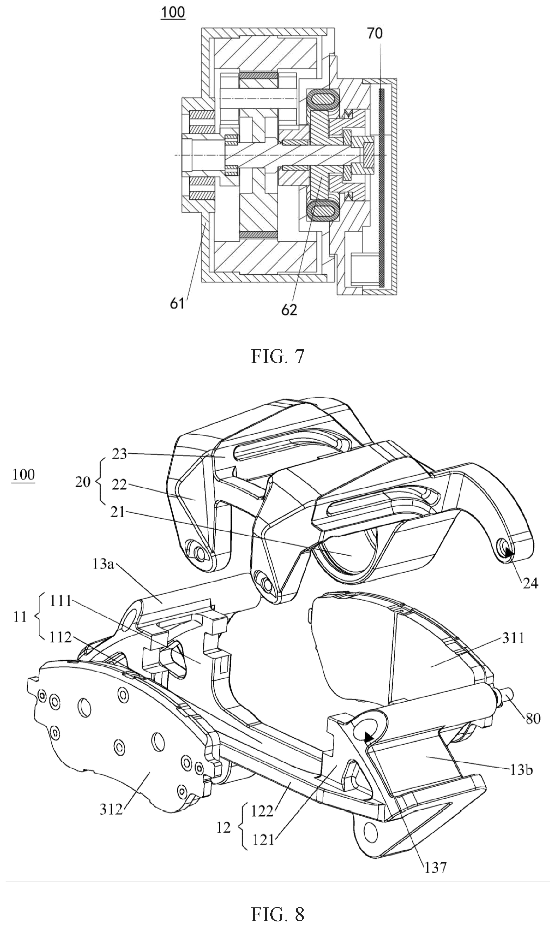

Refer to FIG. 5 to FIG. 7. FIG. 5 is a diagram of an outline structure of the electro-mechanical brake apparatus 100 at the caliper body 20 according to an embodiment of this application. FIG. 6 is a cross-sectional view of the electro-mechanical brake apparatus 100 at the caliper body 20 according to an embodiment of this application. FIG. 7 is a cross-sectional view of the electro-mechanical brake apparatus 100 at the reducer 60 according to an embodiment of this application.

As shown in FIG. 5 to FIG. 7, the caliper bracket 10 includes a first V-shaped frame 11 and a second V-shaped frame 12. The first V-shaped frame 11 and the second V-shaped frame 12 are respectively arranged on two sides of the brake disc 1002 along the axial direction of the brake disc 1002. The first V-shaped frame 11 is configured to be fastened to the vehicle frame and is configured to mount the first brake pad 311. The second V-shaped frame 12 is configured to mount the second brake pad 312. In an embodiment, the first V-shaped frame 11 includes two first legs 111. The first brake pad 311 is mounted between the two first legs 111. Two opposite sides of the first brake pad 311 are respectively slidably connected to the two first legs 111. In an embodiment, the second V-shaped frame 12 includes two second legs 121. The second brake pad 312 is mounted between the two second legs 121. Two opposite sides of the second brake pad 312 are respectively slidably connected to the two second legs 121. A sliding direction of the first brake pad 311 and a sliding direction of the second brake pad 312 are parallel to the axial direction of the brake disc 1002.

In an embodiment, the caliper body 20 is roughly U-shaped, and the caliper body 20 includes a main body portion 21, a claw portion 22, and a connection portion 23. The main body portion 21 and the claw portion 22 are respectively arranged on the two sides of the brake disc 1002 along the axial direction of the brake disc 1002, and the main body portion 21 and the claw portion 22 are further respectively arranged on two sides of the two brake pads 31 along the axial direction of the brake disc 1002. The connection portion 23 is located on an outer side of the brake disc 1002 along a radial direction of the brake disc 1002, and the connection portion 23 is configured to be fastened to the main body portion 21 and the claw portion 22.

In an embodiment, the first brake pad 311 is mounted on a surface that is of the main body portion 21 and that faces the claw portion 22. The electro-mechanical brake apparatus 100 in this application further includes a piston 42. Along the axial direction of the brake disc 1002, the piston 42 is located on a side that is of the first brake pad 311 and that is away from the brake disc 1002, and the piston 42 is configured to abut against the first brake pad 311. A surface that is of the claw portion 22 and that faces the main body portion 21 is used to enclose the second brake pad 312. The main body portion 21, the first V-shaped frame 11, the second V-shaped frame 12, and the claw portion 22 are sequentially arranged along the sliding direction of the brake pad 31.

In an embodiment, the first brake pad 311 is slidably connected to the main body portion 21. In an embodiment, the second brake pad 312 is fastened to the claw portion 22.

The main body portion 21 is further configured to be slidably connected to the first V-shaped frame 11 of the caliper bracket 10. The transmission mechanism 41 is accommodated in an accommodation groove of the main body portion 21. The housing 61 of the reducer 60 is fastened on a side that is of the main body portion 21 and that is away from the claw portion 22. Along the axial direction of the brake disc 1002, one end of the transmission mechanism 41 is configured to be in transmission connection to the gear set 62 of the reducer 60, and the other end of the transmission mechanism 41 is configured to drive the piston 42.

Specifically, through holes are respectively provided in the main body portion 21 and the housing 61 of the reducer 60. In an embodiment, the reducer 60 further includes an output shaft 63. Along the arrangement direction of the caliper body 20 and the reducer 60, one end of the output shaft 63 is in transmission connection to the gear set 62, and the other end of the output shaft 63 sequentially passes through two through holes and is coaxially fastened to the transmission mechanism 41.

In some other embodiments, the transmission mechanism 41 is partially accommodated in the accommodation groove. Along the arrangement direction of the caliper body 20 and the reducer 60, one end of the transmission mechanism 41 is accommodated in the accommodation groove, and the other end of the transmission mechanism 41 sequentially passes through two through holes and extends into the housing 61 of the reducer 60, to be in transmission connection to the gear set 62 of the reducer 60.

In this embodiment of this application, a geometric axis of the motor shaft of the brake motor 50 is parallel to the axial direction of the transmission mechanism 41. A stator of the brake motor 50 is configured to be electrically connected to an external circuit. When the electro-mechanical brake apparatus 100 in this application is working, an alternating current of the external circuit can enable the stator to generate an alternating magnetic field. A rotor rotates around an axial direction of the motor shaft based on the alternating magnetic field, and drives the motor shaft to synchronously rotate. Due to different voltage phases of an alternating current, a rotation direction of the rotor also varies. In other words, the motor shaft of the brake motor 50 can rotate in one direction to drive the brake pad 31 to implement braking, and the motor shaft of the brake motor 50 can also rotate in another direction to release the brake pad 31 from the brake disc 1002 to terminate the braking. One direction means that the motor shaft of the brake motor 50 rotates forward, and another direction means that the motor shaft of the brake motor 50 rotates in reverse.

When the brake motor 50 rotates forward, the reducer 60 drives the transmission mechanism 41 to rotate forward along an axis of the transmission mechanism 41, the transmission mechanism 41 drives the piston 42 to slide toward the brake disc 1002, and the piston 42 pushes the brake pad 31 to slide toward the brake disc 1002 relative to the caliper bracket 10, until the brake pad 31 is in contact with the brake disc 1002 to implement braking. When the brake motor 50 rotates in reverse, the reducer 60 drives the transmission mechanism 41 to rotate in reverse along the axis of the transmission mechanism 41, the transmission mechanism 41 drives the piston 42 to slide in a direction away from the brake disc 1002 relative to the caliper bracket 10, and the brake pad 31 is released from the brake disc 1002.

In some embodiments, a separation spring 32 is further disposed between the two brake pads 31. Two opposite ends of the separation spring 32 respectively abut against the two brake pads 31. The separation spring 32 is configured to provide elastic force for the two brake pads 31 to be away from each other along the axial direction of the transmission mechanism 41, to ensure that after the piston 42 slides away from the brake disc 1002, the two brake pads 31 are released from the brake disc 1002 to terminate braking.

In an embodiment, the electro-mechanical brake apparatus 100 in this application further includes a circuit board 70. The circuit board 70 is accommodated in and fastened to the housing 61 of the reducer 60. The housing 61 of the reducer 60 is configured to form reliable sealing protection effect for the circuit board 70. The circuit board 70 is configured to be electrically connected to the brake motor 50, and the circuit board 70 is further configured to be electrically connected to the external circuit. In an embodiment, the circuit board 70 is configured to be electrically connected to a control system of the vehicle.

Specifically, when the vehicle needs to brake, a user inputs a braking command through the brake pedal, and the control system of the vehicle processes the braking command and then transmits the processed braking command to the circuit board 70. The circuit board 70 drives the stator of the brake motor 50 to generate an alternating magnetic field, which in turn drives the rotor to rotate the motor shaft forward. The motor shaft drives the gear set 62 of the reducer 60 that is in transmission connection to the motor shaft, to rotate forward synchronously. The gear set 62 adjusts torque and a rotational speed of driving force based on an internal structure of the gear set 62, and outputs adjusted torque and an adjusted rotational speed through the output shaft 63. The output shaft 63 drives the transmission mechanism 41 to synchronously rotate forward. The transmission mechanism 41 converts a rotation action of the transmission mechanism 41 into a sliding action of the piston 42, that is, the transmission mechanism 41 drives the piston 42 to slide along the axis of the transmission mechanism 41. A sliding direction of the transmission mechanism 41 is a direction toward the brake disc 1002, and the piston 42 pushes the first brake pad 311 to move toward the brake disc 1002 relative to the first V-shaped frame 11, so that the first brake pad 311 is in contact with the brake disc 1002 to generate friction force.

After the first brake pad 311 is in contact with and abuts against the brake disc 1002, the stator of the brake motor 50 continues to drive the rotor to rotate forward, and the piston 42 continues to slide along the axial direction of the transmission mechanism 41 through a same power transmission path. Because a position of the brake disc 1002 is fixed, the piston 42, the first brake pad 311, and the brake disc 1002 sequentially abut against each other. The piston 42 receives reverse abutting thrust from the brake disc 1002 and transfers the thrust to the transmission mechanism 41. The transmission mechanism 41 converts the driving force transferred by the brake motor 50 into a sliding action of reversely pushing the caliper body 20 relative to the caliper bracket 10. In other words, after the first brake pad 311 is in contact with and abuts against the brake disc 1002, the transmission mechanism 41 rotates to further increase a length of the transmission mechanism 41, and reversely pushes the caliper body 20 to slide relative to the caliper bracket 10 in a direction toward the housing 61. The housing 61 synchronously slides with the caliper body 20 in a direction away from the brake disc 1002.

Sliding of the caliper body 20 in the direction toward the housing 61 may drive the claw portion 22 to synchronously slide in a direction toward the housing 61. Because the claw portion 22 is located on a side that is of the brake disc 1002 and that is away from the housing 61, a sliding direction of the claw portion 22 is a direction toward the brake disc 1002. That is, after the first brake pad 311 is in contact with and abuts against the brake disc 1002, the transmission mechanism 41 further drives the claw portion 22 to slide toward the brake disc 1002. The claw portion 22 can drive the second brake pad 312 to synchronously slide toward the brake disc 1002 relative to the second V-shaped frame 12, until the second brake pad 312 is in contact with the brake disc 1002 to generate friction force.

In this way, the transmission mechanism 41 drives the two brake pads 31 located on the two sides of the brake disc 1002 to slide oppositely and to be respectively in contact with the two outer surfaces of the brake disc 1002 that face away from each other, to generate friction force to brake the brake disc 1002, to implement braking of the vehicle.

After the braking is completed, the circuit board 70 drives, according to a working instruction input by the control system, the stator of the brake motor 50 to generate an alternating magnetic field, which in turn drives the rotor to rotate in reverse. The rotor sequentially drives the gear set 62 of the reducer 60, the output shaft 63 of the reducer 60, and the transmission mechanism 41 to synchronously rotate in reverse. Reverse rotation of the transmission mechanism 41 may drive the piston 42 to slide in the direction away from the brake disc 1002. In this way, a distance between the two brake pads 31 increases, the two brake pads 31 are separately released from contact with the brake disc 1002 under an action of the separation spring 32 to cancel the braking, and the wheel 1001 continues to rotate and drives the vehicle to travel.

In an embodiment, the transmission mechanism 41 in this application includes a ball screw 411 and a nut 412. The nut 412 is accommodated in the main body portion 21, the nut 412 is coaxially sleeved on an outer side of the ball screw 411, and the ball screw 411 is configured to be in coaxial transmission with the output shaft 63 of the reducer 60. The output shaft 63 of the reducer 60 drives the ball screw 411 to rotate, to drive the nut 412 to slide.

Threads on an inner circumferential surface of the nut 412 are configured to be engaged with threads on an outer circumferential surface of the ball screw 411. When the ball screw 411 is driven by the reducer 60 to rotate around an axis of the ball screw 411, the ball screw 411 may drive the nut 412 to slide along the axis of the ball screw 411. On a side that is of the nut 412 and that is away from the reducer 60, the nut 412, the piston 42, the first brake pad 311, and the brake disc 1002 are sequentially arranged along the axis of the ball screw 411. The ball screw 411 may drive the nut 412 to slide along the axis of the ball screw 411, to drive the brake pad 31 to move relative to the brake disc 1002.

In another embodiment, along the axial direction of the transmission mechanism 41, a transmission groove is provided on an end face that is of the piston 42 and that faces the brake motor 50, and the transmission groove is configured to accommodate the transmission mechanism 41. Threads on an inner groove wall of the transmission groove are configured to be engaged with threads on an outer circumferential surface of the transmission mechanism 41. When the transmission mechanism 41 is driven by the reducer 60 to rotate along the axis of the transmission mechanism 41, the transmission mechanism 41 may directly drive the piston 42 to slide along the axis of the transmission mechanism 41, and drive the brake pad 31 to move relative to the brake disc 1002.

In an embodiment, the electro-mechanical brake apparatus 100 in this application further includes a position sensor. The position sensor is configured to detect a rotation angle of the motor shaft of the brake motor 50, to adjust a driving force value of the brake motor 50. The position sensor includes a stator and a rotor, the stator of the position sensor is fastened to the housing 61 of the reducer 60, and the rotor of the position sensor is in coaxial transmission with the motor shaft of the brake motor 50 or the output shaft 63 of the reducer 60. The stator of the position sensor is directly fastened to the housing 61 of the reducer 60. In another embodiment, the stator of the position sensor is fastened to the circuit board 70 and indirectly fastened to the housing 61 of the reducer 60 via the circuit board 70. The rotor of the position sensor is in coaxial transmission with the motor shaft of the brake motor 50 or the output shaft 63 of the reducer 60.

Through cooperation between the stator and the rotor of the position sensor, rotation angles of the motor shaft of the brake motor 50 and the output shaft 63 of the reducer 60 in an inner cavity of the housing 61 of the reducer 60 may be detected. The position sensor is further in communication connection to the circuit board 70. The circuit board 70 receives an angle signal detected by the position sensor, calculates a rotation angle of the rotor in the brake motor 50, and adjusts the driving force value of the brake motor 50, that is, adjusts braking intensity of the vehicle, to match a braking instruction of the user.

In an embodiment, the electro-mechanical brake apparatus 100 in this application includes a locking mechanism. The locking mechanism is configured to lock or release the motor shaft of the brake motor 50, or the locking mechanism is configured to lock or release the output shaft 63 of the reducer 60, so that the electro-mechanical brake apparatus 100 in this application further has a parking function. Specifically, in an embodiment, a part of the locking mechanism is fastened to the housing 61 of the reducer 60, and the other part acts on the motor shaft of the brake motor 50 or the output shaft 63 of the reducer 60. When the brake pad 31 of the electro-mechanical brake apparatus 100 abuts against the brake disc 1002, the locking mechanism may be used to lock the motor shaft of the brake motor 50 or the output shaft 63 of the reducer 60, to maintain a state in which the brake pad 31 abuts against the brake disc 1002. The brake disc 1002 no longer rotates, and the vehicle enters a parking state.

For the electro-mechanical brake apparatus 100 in this application, the caliper bracket 10 of the electro-mechanical brake apparatus 100 in this application further includes two axial connection bridges 13, and a surface of one of the first legs 111 of the first V-shaped frame 11 is configured to be fastened to one of the second legs 121 through one axial connection bridge 13. In other words, along an arrangement direction of the two first legs 111, the two axial connection bridges 13 are arranged at an interval, and along the sliding direction of the brake pad 31, one end of each axial connection bridge 13 is configured to be connected to one of the first legs 111, and the other end of each axial connection bridge 13 is configured to be connected to one of the second legs 121. In this case, the second V-shaped frame 12 is fastened to the vehicle frame sequentially through the two axial connection bridges 13 and one first V-shaped frame 11.

For ease of description, the two axial connection bridges 13 are defined as a first axial connection bridge 13a and a second axial connection bridge 13b respectively.

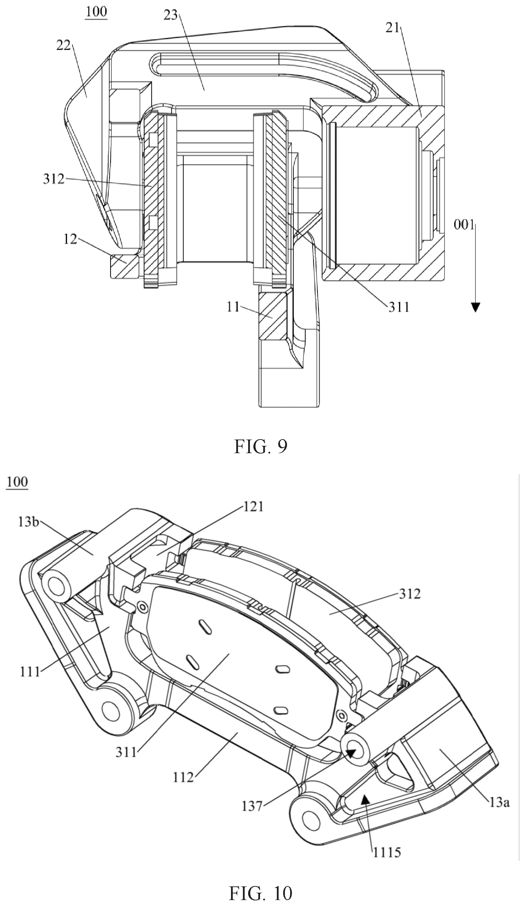

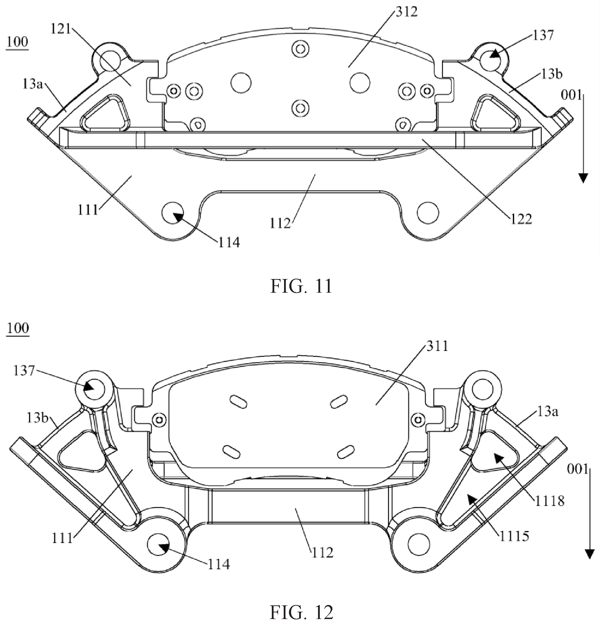

Refer to FIG. 8 to FIG. 12. FIG. 8 is a partial exploded view of a structure of the electro-mechanical brake apparatus 100 at the caliper body 20 according to an embodiment of this application. FIG. 9 is a cross-sectional view of the electro-mechanical brake apparatus 100 at the caliper body 20 according to an embodiment of this application. FIG. 10 is a diagram of an outline structure of the electro-mechanical brake apparatus 100 at the caliper bracket 10 according to an embodiment of this application. FIG. 11 is a front view of a structure of the electro-mechanical brake apparatus 100 at the caliper bracket 10 according to an embodiment of this application. FIG. 12 is another front view of a structure of the electro-mechanical brake apparatus 100 at the caliper bracket 10 according to an embodiment of this application. For ease of description, the brake motor 50, the reducer 60, the circuit board 70, the transmission mechanism 41, and the piston 42 are omitted from FIG. 8 and subsequent illustrations.

As shown in FIG. 8 to FIG. 12, the first V-shaped frame 11 further includes a first connection section 112, and the first connection section 112 is configured to connect the two first legs 111. When the electro-mechanical brake apparatus 100 in this application is working, the first brake pad 311 is in contact with the brake disc 1002, and the brake pad 31 causes, based on rotation inertia of the brake disc 1002, the first brake pad 311 to tend to follow rotation of the brake disc 1002. In other words, friction force between the first brake pad 311 and the brake disc 1002 causes the first brake pad 311 to tend to rotate around a geometric axis of the brake disc 1002. In this case, friction force exerted by the brake disc 1002 on the first brake pad 311 causes the first brake pad 311 to abut against a first leg 111 connected to the first axial connection bridge 13a, so that the friction force exerted by the brake disc 1002 on the first brake pad 311 is transferred to the first leg 111 connected to the first axial connection bridge 13a. In this way, the first leg 111 connected to the first axial connection bridge 13a deforms in a direction away from a first leg 111 connected to the second axial connection bridge 13b.

The first connection section 112 is configured to connect the first leg 111 connected to the first axial connection bridge 13a and the first leg 111 connected to the second axial connection bridge 13b. When the first leg 111 connected to the first axial connection bridge 13a is subjected to the friction force exerted by the brake disc 1002 on the first brake pad 311, the friction force can also be transferred, through the first connection section 112, to the first leg 111 connected to the second axial connection bridge 13b, so that the first leg 111 connected to the second axial connection bridge 13b deforms toward the first leg 111 connected to the first axial connection bridge 13a.

In other words, in a working process of the electro-mechanical brake apparatus 100 in this application, the first connection section 112 is configured to balance friction force transferred by the brake disc 1002 to the first V-shaped frame 11 through the first brake pad 311, to reduce unilateral deformation of the first V-shaped frame 11, thereby ensuring structural strength of the first V-shaped frame 11 and ensuring reliable braking of the electro-mechanical brake apparatus 100 in this application.

Based on the foregoing descriptions, it can be learned that the second V-shaped frame 12 further includes a second connection section 122, and the second connection section 122 is configured to connect the two second legs 121. In a working process of the electro-mechanical brake apparatus 100 in this application, when the second brake pad 312 is in contact with the brake disc 1002, friction force exerted by the brake disc 1002 on the second brake pad 312 causes the second brake pad 312 to abut against a second leg 121 connected to the first axial connection bridge 13a, so that the friction force exerted by the brake disc 1002 on the second brake pad 312 is transferred to the second leg 121 connected to the first axial connection bridge 13a. Correspondingly, in a working process of the electro-mechanical brake apparatus 100 in this application, the second connection section 122 is configured to balance friction force transferred by the brake disc 1002 to the second V-shaped frame 12 through the second brake pad 312, to reduce unilateral deformation of the second V-shaped frame 12, thereby ensuring structural strength of the second V-shaped frame 12 and ensuring reliable braking of the electro-mechanical brake apparatus 100 in this application.

As shown in FIG. 8 to FIG. 12, end faces on a same side of the two first legs 111 along a first direction 001 are connected as one through the first connection section 112. Along the sliding direction of the brake pad 31, end faces on a same side of the two second legs 121 away from the first leg 111 are connected as one through the second connection section 122. In other words, the second connection section 122, the second leg 121, and the first leg 111 are sequentially arranged along the sliding direction of the brake pad 31, and the first leg 111 and the first connection section 112 at least partially overlap along the first direction 001, to adapt to wheel-end space and facilitate miniaturization of the electro-mechanical brake apparatus 100 in this application.

In an embodiment, along the arrangement direction of the two first legs 111, the first axial connection bridge 13a includes a first side wall 131 and a second side wall 132 that face away from each other. Along the arrangement direction of the two first legs 111, the first side wall 131, the second side wall 132, and the second axial connection bridge 13b are sequentially arranged. Along the first direction 001, a minimum distance between the first side wall 131 and the first connection section 112 is less than a minimum distance between the second side wall 132 and the first connection section 112. The first direction 001 is perpendicular to the arrangement direction of the two first legs 111 and the sliding direction of the brake pad 31.

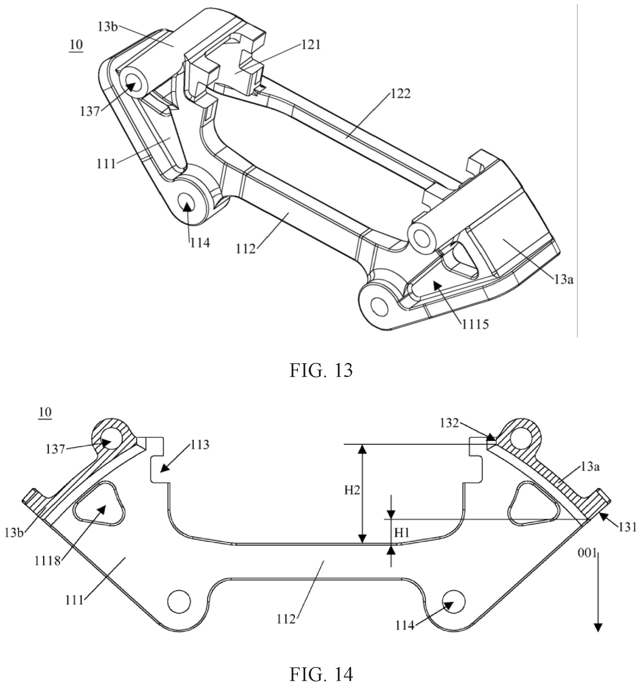

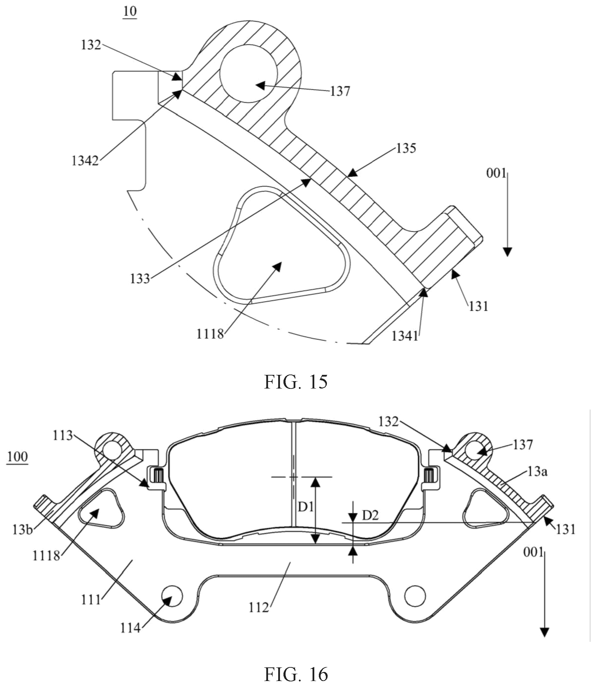

Refer to FIG. 13 to FIG. 15. FIG. 13 is a diagram of an outline structure of the caliper bracket 10 in the electro-mechanical brake apparatus 100 according to an embodiment of this application. FIG. 14 is a cross-sectional view of the caliper bracket 10 in the electro-mechanical brake apparatus 100 according to an embodiment of this application. FIG. 15 is a partial cross-sectional view of the caliper bracket 10 in the electro-mechanical brake apparatus 100 according to an embodiment of this application.

As shown in FIG. 13 to FIG. 15, a minimum distance between the first side wall 131 and the first connection section 112 along the first direction 001 is a first size H1, and a minimum size between the second side wall 132 and the first connection section 112 along the first direction 001 is a second size H2. In a working process of the electro-mechanical brake apparatus 100 in this application, the brake disc 1002 causes the brake pad 31 to abut against the first leg 111 and the second leg 121 that are connected to the first axial connection bridge 13a. The second leg 121 is fastened to the first leg 111 through the axial connection bridge 13, and the caliper bracket 10 is fastened to the vehicle frame only through the first V-shaped frame 11. In this case, an effective moment arm of equivalent moment formed on the caliper bracket 10 by force acting on the second leg 121 is related to the first size H1.

In the illustration shown in FIG. 15, the first size H1 is less than the second size H2. In other words, along the first direction 001, the first side wall 131 is closer to the first connection section 112 than the second side wall 132. In this case, a minimum distance between the axial connection bridge 13 and the first connection section 112 is equal to the first size H1. In other words, in a working process of the electro-mechanical brake apparatus 100 in this application, the effective moment arm of the equivalent moment formed on the caliper bracket 10 by the force acting on the second leg 121 is positively correlated with the first size H1.

Therefore, the electro-mechanical brake apparatus 100 in this application adjusts a shape of the first axial connection bridge 13a, and makes the first side wall 131 of the first axial connection bridge 13a closer to the first connection section 112 than the second side wall 132, to reduce equivalent moment exerted by the brake disc 1002 on the second V-shaped frame 12 in a working process of the electro-mechanical brake apparatus 100 in this application. This avoids a phenomenon in which deformation of the second V-shaped frame 12 is greater than that of the first V-shaped frame 11 due to excessively large equivalent moment applied to the second V-shaped frame 12, thereby preventing excessive wear of the brake pad 31 during braking and affecting braking effect.

Specifically, in a working process of the electro-mechanical brake apparatus 100 in this application, when deformation of the first V-shaped frame 11 is less than that of the second V-shaped frame 12, the second V-shaped frame 12 causes the first V-shaped frame 11 to twist through the axial connection bridge 13, thereby changing a distance between the first V-shaped frame 11 and the brake disc 1002 and a distance between the second V-shaped frame 12 and the brake disc 1002. This may result in a case in which a part of the brake pad 31 is unable to be in contact with the brake disc 1002, leading to eccentric wear of the brake pad 31.

In other words, the first axial connection bridge 13a reduces a distance between the first side wall 131 and the first connection section 112, to reduce a difference between the deformation of the first V-shaped frame 11 and the deformation of the second V-shaped frame 12 in a working process of the electro-mechanical brake apparatus 100 in this application, and reduce uneven leading-trailing eccentric wear at an end (that is, a leading end) of the brake pad 31 at which the brake disc 1002 rotates into the brake pad or an end (that is, a trailing end) of the brake pad 31 at which the brake disc 1002 rotates out of the brake pad. In this way, pressure distribution uniformity of the brake disc 1002 acting on the brake pad 31 is increased, a pressure uniform distribution coefficient of the brake pad 31 is increased, and reliable braking of the electro-mechanical brake apparatus 100 in this application is ensured.

It should be noted that, in this embodiment of this application and subsequent embodiments, positions of the first axial connection bridge 13a and the second axial connection bridge 13b are related to a working condition of the vehicle. Specifically, in a normal working process of the vehicle, the working condition of the vehicle includes a forward working condition and a reverse working condition. When the vehicle is in the forward working condition or the reverse working condition, friction force exerted by the brake disc 1002 on the brake pad 31 causes the brake pad 31 to abut against the first leg 111 and the second leg 121 that are connected to the first axial connection bridge 13a. In other words, when the vehicle is in the forward working condition or the reverse working condition, the second axial connection bridge 13b, the brake pad 31, and the first axial connection bridge 13a are sequentially arranged along a rotation direction of the brake disc 1002.

A rotation direction of the brake disc 1002 in the forward working condition is opposite to a rotation direction of the brake disc 1002 in the reverse working condition. In an embodiment, when the vehicle is in the forward working condition, the second axial connection bridge 13b, the brake pad 31, and the first axial connection bridge 13a are sequentially arranged along the rotation direction of the brake disc 1002. In other words, in a process in which the vehicle is in the forward working condition, when the electro-mechanical brake apparatus 100 in this application is working, friction force exerted by the brake disc 1002 on the two brake pads 31 causes the two brake pads 31 to abut against the first leg 111 and the second leg 121 that are connected to the first axial connection bridge 13a.

A maximum rotational speed of the vehicle in the forward working condition is greater than a maximum rotational speed of the vehicle in the reverse working condition, and in a normal use process of the vehicle, a time for which the vehicle is in the forward working condition is usually greater than a time for which the vehicle is in the reverse working condition. It may be understood that, in this application, the electro-mechanical brake apparatus 100 changes relative positions of the first side wall 131 and the second side wall 132 of the first axial connection bridge 13a, and makes the first side wall 131 closer to the first connection section 112 than the second side wall 132, so that the caliper bracket 10 can adapt to a high rotational speed and a high usage frequency of the brake disc 1002 when the vehicle is in the forward working condition, thereby ensuring reliable braking of the electro-mechanical brake apparatus 100 in this application.

In another embodiment, when the vehicle is in the reverse working condition, the second axial connection bridge 13b, the brake pad 31, and the first axial connection bridge 13a are sequentially arranged along the rotation direction of the brake disc 1002. In other words, in a process in which the vehicle is in the reverse working condition, when the electro-mechanical brake apparatus 100 in this application is working, friction force exerted by the brake disc 1002 on the two brake pads 31 causes the two brake pads 31 to abut against the first leg 111 and the second leg 121 that are connected to the first axial connection bridge 13a.

For ease of description, in this embodiment of this application and subsequent embodiments, when the vehicle is in the forward working condition, the second axial connection bridge 13b, the brake pad 31, and the first axial connection bridge 13a are sequentially arranged along the rotation direction of the brake disc 1002.

In an embodiment, a distance between a center of the first brake pad 311 between the two first legs 111 and the first connection section 112 along the first direction 001 is greater than or equal to a maximum distance between the first side wall 131 and the first connection section 112.

FIG. 16 is a cross-sectional view of the electro-mechanical brake apparatus 100 at the caliper bracket 10 according to an embodiment of this application.

As shown in FIG. 16, the distance between the center of the first brake pad 311 and the first connection section 112 along the first direction 001 is a first distance D1, and the maximum distance between the first side wall 131 and the first connection section 112 is a second distance D2. In a working process of the electro-mechanical brake apparatus 100 in this application, a surface that is of the brake pad 31 and that faces the brake disc 1002 is in contact with the brake disc 1002, and an equivalent action point of the friction force exerted by the brake disc 1002 on the brake pad 31 is a geometric center of the brake pad 31. In other words, the first distance D1 between the center of the brake pad 31 and the first connection section 112 represents an effective moment arm of equivalent moment exerted by the brake disc 1002 on the first V-shaped frame 11.

In this embodiment of this application, the first distance D1 is greater than the second distance D2. In other words, the first side wall 131 is closer to the first connection section 112 than the geometric center of the brake pad 31 along the first direction 001, and along the arrangement direction of the two first legs 111, a projection of the geometric center of the brake pad 31 on the axial connection bridge 13 is accommodated in the axial connection bridge 13. Therefore, in a working process of the electro-mechanical brake apparatus 100 in this application, equivalent moment exerted by the brake pad 31 on the first V-shaped frame 11 can reduce impact on structural stability of the first V-shaped frame 11 under an action of the axial connection bridge 13, thereby reducing deformation of the first V-shaped frame 11, ensuring structural strength of the caliper bracket 10, and ensuring reliable braking of the electro-mechanical brake apparatus 100 in this application.

In some other embodiments, the first distance D1 is equal to the second distance D2. This is not particularly limited in this application.

In an embodiment, one of the first leg 111 connected to the first axial connection bridge 13a and the first brake pad 311 includes a protrusion, and the other of the first leg 111 connected to the first axial connection bridge 13a and the first brake pad 311 includes a slide groove. Along the arrangement direction of the two first legs 111, the protrusion is configured to be embedded in the slide groove, to be slidably connected to the first brake pad 311 and the caliper bracket 10.

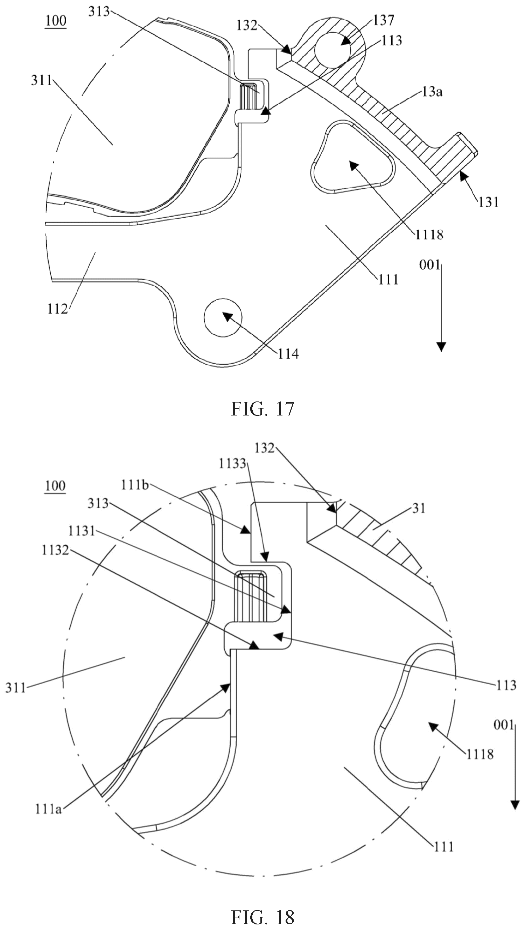

FIG. 17 is a partial cross-sectional view of the electro-mechanical brake apparatus 100 at the caliper bracket 10 according to an embodiment of this application.

As shown in FIG. 17, along the arrangement direction of the two first legs 111, two surfaces that are of the first legs 111 and that are opposite to the first brake pad 311 each include a protrusion and a slide groove. In the illustration shown in FIG. 17, the first brake pad 311 includes a protrusion 313, the first leg 111 includes a slide groove 113, and the protrusion 313 is embedded in the slide groove 113 to implement a sliding connection between the first brake pad 311 and the caliper bracket 10. An extension direction of the slide groove 113 is parallel to an axis direction of the brake disc 1002. In other words, the slide groove 113 is configured to cooperate with the protrusion 313 to limit a sliding direction of the first brake pad 311, to ensure that in a working process of the electro-mechanical brake apparatus 100 in this application, a surface that is of the first brake pad 311 and that faces the brake disc 1002 is in contact with the brake disc 1002 simultaneously, thereby ensuring a contact area between the first brake pad 311 and the brake disc 1002, and ensuring force uniformity between the brake disc 1002 and the first brake pad 311. In this way, the pressure uniform distribution coefficient of the brake pad 31 is increased, and reliable braking of the electro-mechanical brake apparatus 100 in this application is ensured.

For ease of description, in this embodiment of this application and subsequent embodiments, the first brake pad 311 includes the protrusion 313, and the first leg 111 includes the slide groove 113. It may be understood that, in some other embodiments, the first brake pad 311 includes the slide groove, and the first leg includes the protrusion. This is not particularly limited in this application.

In an embodiment, the slide groove 113 includes a first groove wall 1132 and a second groove wall 1133. The second groove wall 1133, the first groove wall 1132, and the first connection section 112 are sequentially arranged along the first direction 001. A size of the first groove wall 1132 is greater than a size of the second groove wall 1133 along the arrangement direction of the two first legs 111, and the size of the first groove wall 1132 is greater than or equal to a protrusion height of the protrusion 313 along the arrangement direction of the two first legs 111. Along the first direction 001, the axial connection bridge 13 includes a connection surface 133 facing the first connection section 112, the connection surface 133 intersects with the first side wall 131 to form a first side edge 1341, and the connection surface 133 intersects with the second side wall 132 to form a second side edge 1342. A distance between the first side edge 1341 and the second side edge 1342 along the first direction 001 is greater than or equal to one half of a distance between the second side edge 1342 and the first groove wall 1132.

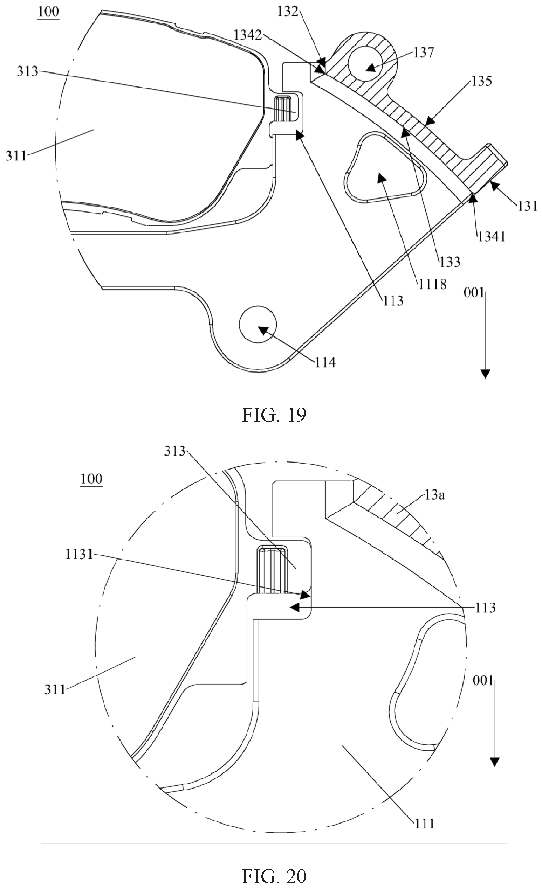

Refer to FIG. 18 and FIG. 19. FIG. 18 is a partial cross-sectional view of the electro-mechanical brake apparatus 100 at the caliper bracket 10 in one embodiment according to an embodiment of this application. FIG. 19 is another partial cross-sectional view of the electro-mechanical brake apparatus 100 at the caliper bracket 10 in one embodiment according to an embodiment of this application.

As shown in FIG. 18 and FIG. 19, along the arrangement direction of the two first legs 111, a surface that is of the first leg 111 connected to the first axial connection bridge 13a and that faces the first brake pad 311 includes a first surface 111a and a second surface 111b that are spaced apart from each other. The first surface 111a is connected to the first groove wall 1132, and the second surface 111b is connected to the second groove wall 1133. In a working process of the electro-mechanical brake apparatus 100 in this application, the brake disc 1002 causes the two brake pads 31 to move toward the first leg 111 and the second leg 121 that are connected to the first axial connection bridge 13a, and causes a side wall of the brake pad 31 to abut against the first surface 111a along an arrangement direction of the two first legs 111. Force exerted by the brake disc 1002 on the brake pad 31 is transferred to the first leg 111 and the second leg 121 through the brake pad 31 and the first surface 111a.

In this embodiment of this application, the distance between the first side edge 1341 and the second side edge 1342 along the first direction 001 is greater than one half of the distance between the second side edge 1342 and the first groove wall 1132. Correspondingly, a distance between the first side edge 1341 and the first connection section 112 along the first direction 001 is less than a sum of one half of the distance between the second side edge 1342 and the first groove wall 1132 and a minimum distance between the first groove wall 1132 and the first connection section 112. In other words, along the first direction 001, the first side edge 1341 is lower than a midpoint between the first groove wall 1132 and the second side edge 1342, to reduce, in a working process of the electro-mechanical brake apparatus 100 in this application, equivalent moment exerted by the brake disc 1002 on the second V-shaped frame 12 during braking. This avoids a phenomenon in which the caliper bracket 10 is subjected to excessively large force exerted by the brake disc 1002 on the second V-shaped frame 12, causing deformation of the second V-shaped frame 12 to become greater than that of the first V-shaped frame 11. In this way, leading-trailing eccentric wear of the brake pad 31 is reduced, the pressure uniform distribution coefficient of the brake pad 31 is increased, and reliable braking of the electro-mechanical brake apparatus 100 in this application is ensured.

In another embodiment, the distance between the first side edge 1341 and the second side edge 1342 along the first direction 001 is equal to one half of the distance between the second side edge 1342 and the first groove wall 1132. In other words, along the first direction 001, the first side edge 1341 is flush with the midpoint between the first groove wall 1132 and the second side edge 1342.

In an embodiment, along the arrangement direction of the two first legs 111, a protrusion height of the protrusion 313 is greater than or equal to a groove depth of the slide groove 113. Along the first direction 001, the axial connection bridge 13 includes the connection surface 133 facing the first connection section 112, the connection surface 133 intersects with the first side wall 131 to form the first side edge 1341, and the connection surface 133 intersects with the second side wall 132 to form the second side edge 1342. The distance between the first side edge 1341 and the second side edge 1342 along the first direction 001 is greater than or equal to one half of a minimum distance between the second side edge 1342 and the protrusion 313.

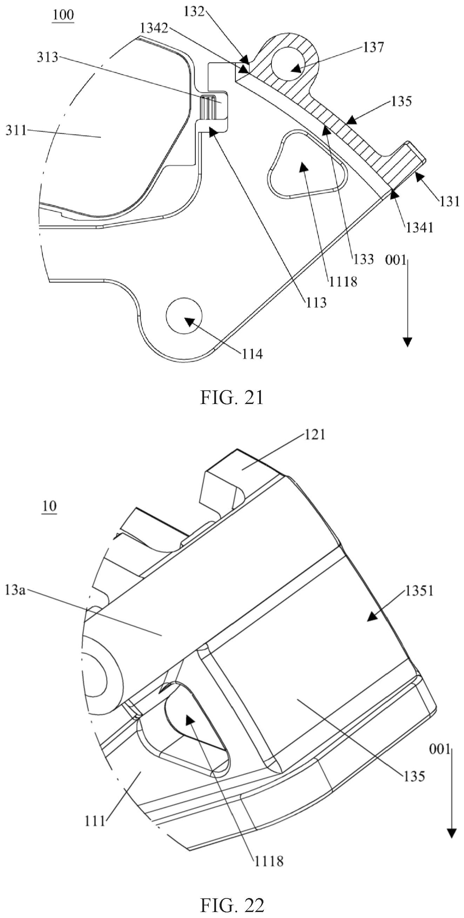

Refer to FIG. 20 and FIG. 21. FIG. 20 is a partial cross-sectional view of the electro-mechanical brake apparatus 100 at the caliper bracket 10 in another embodiment according to an embodiment of this application. FIG. 21 is another partial cross-sectional view of the electro-mechanical brake apparatus 100 at the caliper bracket 10 in another embodiment according to an embodiment of this application.

As shown in FIG. 20 and FIG. 21, along the arrangement direction of the two first legs 111, the protrusion height of the protrusion 313 is greater than the groove depth of the slide groove 113. In a working process of the electro-mechanical brake apparatus 100 in this application, the brake disc 1002 causes the two brake pads 31 to move toward the first leg 111 and the second leg 121 that are connected to the first axial connection bridge 13a, and causes a groove bottom 1131 of the slide groove 113 to abut against the protrusion 313 along the arrangement direction of the two first legs 111. Force exerted by the brake disc 1002 on the brake pad 31 is transferred to the first leg 111 and the second leg 121 through the protrusion 313 and the groove bottom 1131 of the slide groove 113.

In this embodiment of this application, the distance between the first side edge 1341 and the second side edge 1342 along the first direction 001 is greater than one half of the minimum distance between the second side edge 1342 and the protrusion 313. Correspondingly, a minimum distance between the first side edge 1341 and the first connection section 112 along the first direction 001 is less than or equal to a sum of one half of a maximum distance between the second side edge 1342 and the protrusion 313 and a minimum distance between the protrusion 313 and the first connection section 112. In other words, along the first direction 001, the first side edge 1341 is lower than a midpoint between the protrusion 313 and the second side edge 1342, to reduce, in a working process of the electro-mechanical brake apparatus 100 in this application, equivalent moment exerted by the brake disc 1002 on the second V-shaped frame 12 during braking. This avoids a phenomenon in which the caliper bracket 10 is subjected to excessively large force exerted by the brake disc 1002 on the second V-shaped frame 12, causing deformation of the second V-shaped frame 12 to become greater than that of the first V-shaped frame 11. In this way, leading-trailing eccentric wear of the brake pad 31 is reduced, the pressure uniform distribution coefficient of the brake pad 31 is increased, and reliable braking of the electro-mechanical brake apparatus 100 in this application is ensured.

In another embodiment, the distance between the first side edge 1341 and the second side edge 1342 along the first direction 001 is equal to one half of the minimum distance between the second side edge 1342 and the protrusion 313. In other words, along the first direction 001, the first side edge 1341 is flush with the midpoint between the protrusion 313 and the second side edge 1342.

In the foregoing two embodiments, in a working process of the electro-mechanical brake apparatus 100 in this application, based on a geometric shape of a surface that is of the first leg 111 and that faces the first brake pad 311, the brake pad 31 may abut against the groove bottom 1131 of the slide groove 113 through the protrusion 313 or abut against the first surface 111a through the side wall of the brake pad 31, to transfer, to the first leg 111, the force exerted by the brake disc 1002 on the brake pad 31. For ease of description, subsequent embodiments of this application are described based on a geometric shape of a first leg 111 corresponding to a case in which the brake pad 31 abuts against the first surface 111a through the side wall of the brake pad 31, to transfer, to the first leg 111, the force exerted by the brake disc 1002 on the brake pad 31.

In an embodiment, along the first direction 001, the first axial connection bridge 13a includes the connection surface 133 facing the first connection section 112, the connection surface 133 intersects with the first side wall 131 to form the first side edge 1341, and the connection surface 133 intersects with the second side wall 132 to form the second side edge 1342. The second side edge 1342, the slide groove 113, and the first side edge 1341 are sequentially arranged along the first direction 001.

In the illustration shown in FIG. 19, along the first direction 001, the first side edge 1341 is lower than the first groove wall 1132, to further reduce the distance between the first side edge 1341 and the first connection section 112, so that in a working process of the electro-mechanical brake apparatus 100 in this application, equivalent moment exerted by the brake disc 1002 on the second V-shaped frame 12 during braking is further reduced. This avoids a phenomenon in which the caliper bracket 10 is subjected to excessively large force exerted by the brake disc 1002 on the second V-shaped frame 12, causing deformation of the second V-shaped frame 12 to become greater than that of the first V-shaped frame 11. In this way, leading-trailing eccentric wear of the brake pad 31 is reduced, the pressure uniform distribution coefficient of the brake pad 31 is increased, and reliable braking of the electro-mechanical brake apparatus 100 in this application is ensured.

In an embodiment, along the first direction 001, the axial connection bridge 13 includes a second connection surface 135 that faces away from the first connection section 112, a middle segment 1351 of the second connection surface 135 is arc-shaped along the arrangement direction of the two first legs 111, and a curvature of the middle segment 1351 of the second connection surface 135 is greater than or equal to a curvature of the brake disc 1002.

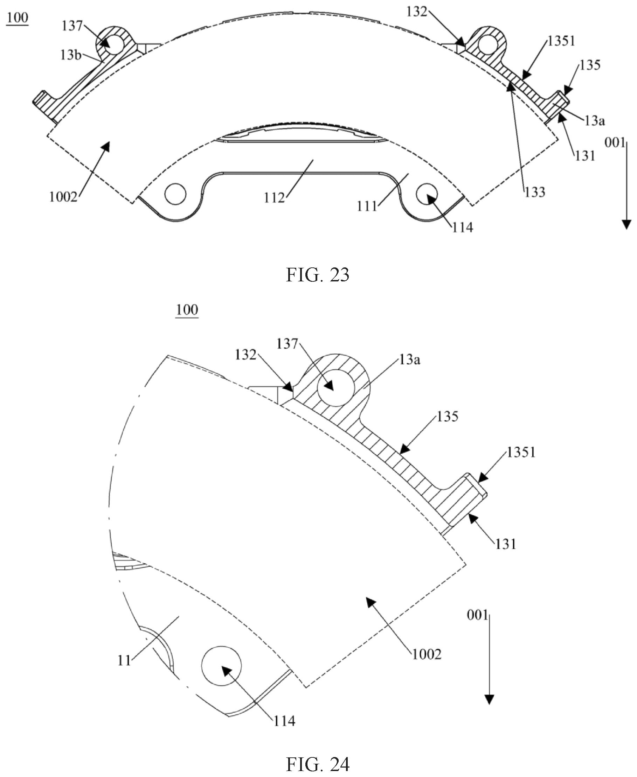

Refer to FIG. 22 to FIG. 24. FIG. 22 is a diagram of a partial outline structure of the electro-mechanical brake apparatus 100 at the caliper bracket 10 according to an embodiment of this application. FIG. 23 is another cross-sectional view of the electro-mechanical brake apparatus 100 at the caliper bracket 10 according to an embodiment of this application. FIG. 24 is another partial cross-sectional view of the electro-mechanical brake apparatus 100 at the caliper bracket 10 according to an embodiment of this application. To facilitate reflection of a relationship between the brake disc 1002 and the middle segment 1351 of the second connection surface 135, a contour of the brake disc 1002 is indicated using a dashed line in FIG. 23 and FIG. 24.

As shown in FIG. 22 to FIG. 24, the brake disc 1002 is disc-shaped, and along the radial direction of the brake disc 1002, the brake disc 1002 is spaced apart from the axial connection bridge 13. Along the radial direction of the brake disc 1002, a middle segment of an outer surface of the axial connection bridge 13 is arc-shaped, and a curvature of an arc surface is greater than the curvature of the brake disc 1002, to adapt to external space of the brake disc 1002, and reduce space occupied by the axial connection bridge 13 in the radial direction of the brake disc 1002, thereby facilitating miniaturization of the electro-mechanical brake apparatus 100 in this application.

In addition, a curvature of the middle segment 1351 of the second connection surface 135 is greater than the curvature of the brake disc 1002, and a size of the axial connection bridge 13 along the arrangement direction of the two first legs 111 can be further increased, to ensure connection strength of the axial connection bridge 13 to the corresponding first leg 111 and second leg 121. This avoids a case in which the first leg 111 and the second leg 121 are damaged by the force exerted by the brake disc 1002 on the second brake pad 312 due to an excessively small size of the axial connection bridge 13. In this way, structural strength of the caliper bracket 10 is ensured, and reliable braking of the electro-mechanical brake apparatus 100 in this application is ensured.

In another embodiment, the curvature of the middle segment 1351 of the second connection surface 135 is equal to the curvature of the brake disc 1002. This is not particularly limited in this application.

In an embodiment, the second connection surface 135 includes two spaced edge regions 1352 along the arrangement direction of the two first legs 111. One of the two edge regions 1352 is connected to the first side wall 131, and the other of the two edge regions 1352 is connected to the second side wall 132. Along the first direction 001, each of the edge regions 1352 includes a protruding portion 1353 extending in a direction away from the first connection section 112.

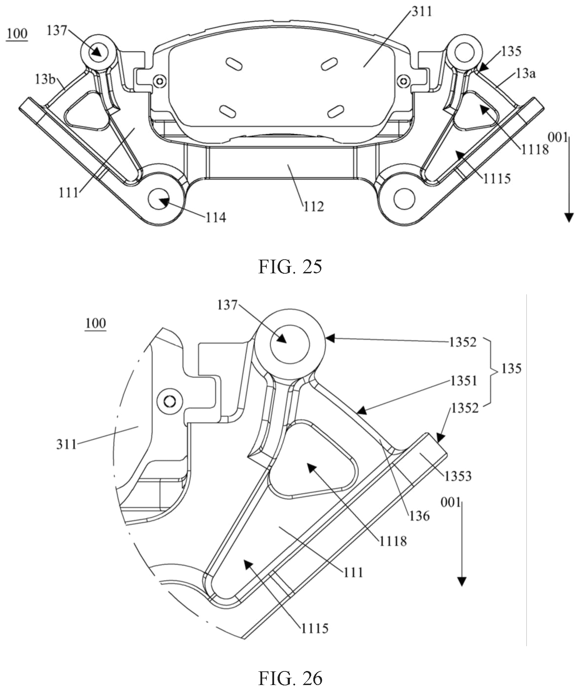

Refer to FIG. 25 and FIG. 26. FIG. 25 is a front view of a structure of the electro-mechanical brake apparatus 100 at the caliper bracket 10 according to an embodiment of this application. FIG. 26 is a partial front view of a structure of the electro-mechanical brake apparatus 100 at the caliper bracket 10 according to an embodiment of this application.

As shown in FIG. 25 and FIG. 26, along the arrangement direction of the two first legs 111, the two edge regions 1352 of the second connection surface 135 are respectively arranged on two sides of the middle segment 1351 of the second connection surface 135, and are separately connected to the middle segment 1351 of the second connection surface 135. Based on provision of the protruding portion 1353 of each edge region 1352, it may be understood that, along the arrangement direction of the two first legs 111, the middle segment 1351 of the second connection surface 135 is recessed relative to the edge region 1352 of the second connection surface 135, to reduce a weight of the axial connection bridge 13 while ensuring connection strength of the axial connection bridge 13 to the first V-shaped frame 11 and the second V-shaped frame 12.

Because the caliper bracket 10 is fastened to the vehicle frame only through the first V-shaped frame 11, correspondingly, the first V-shaped frame 11, the axial connection bridge 13, and the second V-shaped frame 12 that are connected along the sliding direction of the brake pad 31 form a structure similar to a cantilever beam structure. In this embodiment of this application, the weight of the axial connection bridge 13 is reduced, thereby reducing bending moment formed by the axial connection bridge 13. This avoids a phenomenon in which connection strength between the axial connection bridge 13 and the first V-shaped frame 11 is reduced because the axial connection bridge 13 is excessively heavy. In this way, structural strength of the caliper bracket 10 is ensured, and reliable braking of the electro-mechanical brake apparatus 100 in this application is ensured.

In an embodiment, a surface area of the first side wall 131 is greater than or equal to a surface area of the second side wall 132. In an embodiment, the surface area of the first side wall 131 is greater than the surface area of the second side wall 132. Along an arrangement direction of the two first legs 111, a cross-sectional area of one end that is of the first axial connection bridge 13a and that is close to the second axial connection bridge 13b is less than a cross-sectional area of the other end of the first axial connection bridge 13a.

In a working process of the electro-mechanical brake apparatus 100 in this application, when the force exerted by the brake disc 1002 on the second brake pad 312 is transferred to the second leg 121 connected to the first axial connection bridge 13a, the second leg 121 tends to bend relative to the first leg 111 after being subjected to the force. Correspondingly, one end that is of the axial connection bridge 13 and that is connected to the second leg 121 also tends to bend. In this case, torque may be generated on two opposite sides of the axial connection bridge 13 along the sliding direction of the brake pad 31. Meanwhile, because the first side edge 1341 and the second side edge 1342 are respectively arranged on two sides of the slide groove 113 along the first direction 001, one end that is of the axial connection bridge 13 and that is close to the first side wall 131 is further configured to balance moment applied to the first leg 111 and the second leg 121.

In this embodiment of this application, the surface area of the first side wall 131 is large, so that structural strength of the axial connection bridge 13 is improved. This avoids a case in which the axial connection bridge 13 is damaged due to different deformation of the first V-shaped frame 11 and the second V-shaped frame 12, thereby ensuring connection strength of the axial connection bridge 13 to the first V-shaped frame 11 and the second V-shaped frame 12. In addition, leading-trailing eccentric wear of the brake pad 31 is also reduced, the pressure uniform distribution coefficient of the brake pad 31 is increased, and reliable braking of the electro-mechanical brake apparatus 100 in this application is ensured.

In another embodiment, the surface area of the first side wall 131 is equal to the surface area of the second side wall 132. This is not particularly limited in this application.

In an embodiment, a cross-sectional area of the middle segment 136 of the axial connection bridge 13 along the arrangement direction of the two first legs 111 is less than or equal to the surface area of the first side wall 131. In an embodiment, the cross-sectional area of the middle segment 136 of the axial connection bridge 13 along the arrangement direction of the two first legs 111 is less than the surface area of the first side wall 131. In this way, the weight of the axial connection bridge 13 is reduced while ensuring the connection strength of the axial connection bridge 13 to the first V-shaped frame 11 and the second V-shaped frame 12, thereby reducing the bending moment formed by the axial connection bridge 13. This avoids a phenomenon in which the connection strength between the axial connection bridge 13 and the first V-shaped frame 11 is reduced because the axial connection bridge 13 is excessively heavy. In this way, structural strength of the caliper bracket 10 is ensured, and reliable braking of the electro-mechanical brake apparatus 100 in this application is ensured. In another embodiment, the cross-sectional area of the middle segment 136 of the axial connection bridge 13 along the arrangement direction of the two first legs 111 is equal to the surface area of the first side wall 131, to facilitate manufacturing of the axial connection bridge 13.

In an embodiment, the cross-sectional area of the middle segment 136 of the axial connection bridge 13 along the arrangement direction of the two first legs 111 is less than or equal to a surface area of the second side wall 132. In an embodiment, the cross-sectional area of the middle segment 136 of the axial connection bridge 13 along the arrangement direction of the two first legs 111 is less than the surface area of the second side wall 132. In this way, the weight of the axial connection bridge 13 is reduced while ensuring the connection strength of the axial connection bridge 13 to the first V-shaped frame 11 and the second V-shaped frame 12, thereby reducing the bending moment formed by the axial connection bridge 13. This avoids a phenomenon in which the connection strength between the axial connection bridge 13 and the first V-shaped frame 11 is reduced because the axial connection bridge 13 is excessively heavy. In this way, structural strength of the caliper bracket 10 is ensured, and reliable braking of the electro-mechanical brake apparatus 100 in this application is ensured. In another embodiment, the cross-sectional area of the middle segment 136 of the axial connection bridge 13 along the arrangement direction of the two first legs 111 is equal to the surface area of the second side wall 132, to facilitate manufacturing of the axial connection bridge 13.

In an embodiment, along the first direction 001, the first leg 111 includes a first segment 1111 and a second segment 1112 that are connected. The first segment 1111 is connected to the axial connection bridge 13, and the second segment 1112 is connected to the first connection section 112. Along the first direction 001 and toward a direction of the first connection section 112, a size of the second segment 1112 decreases along the arrangement direction of the two first legs 111.

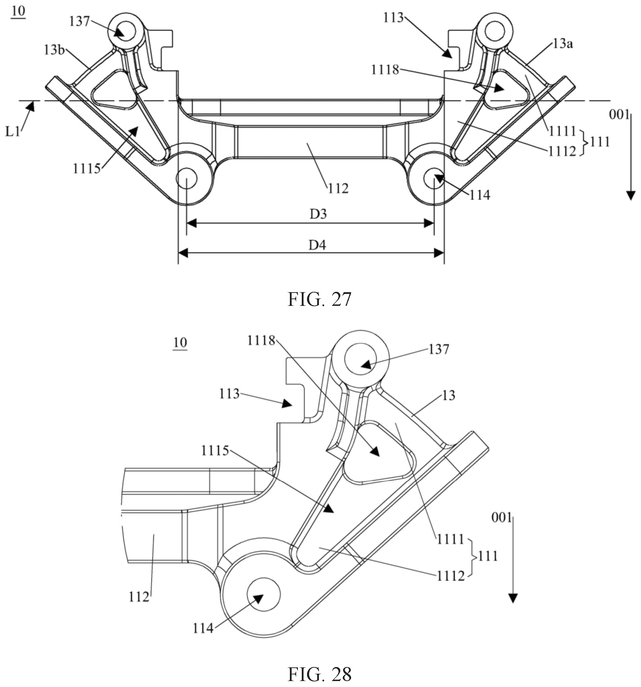

Refer to FIG. 27 and FIG. 28. FIG. 27 is a front view of a structure of the first V-shaped frame 11 of the caliper bracket 10 in the electro-mechanical brake apparatus 100 according to an embodiment of this application. FIG. 28 is a partial front view of a structure of the first V-shaped frame 11 of the caliper bracket 10 in the electro-mechanical brake apparatus 100 according to an embodiment of this application.

As shown in FIG. 27 and FIG. 28, along the first direction 001, a surface that is of the first segment 1111 and that is away from the second segment 1112 is configured to be connected to the axial connection bridge 13. Along the arrangement direction of the two first legs 111, a size of an end that is of the second segment 1112 and that is connected to the first segment 1111 is greater than a size of an end that is of the second segment 1112 and that is connected to the first connection section 112. This reduces a weight of the first V-shaped frame 11 and ensures structural strength of the first V-shaped frame 11 while ensuring a connection area between the first leg 111 and the axial connection bridge 13, thereby improving weight efficiency of the caliper bracket 10.

Along the radial direction of the brake disc 1002, the first segment 1111 is located farther away from the geometric axis of the brake disc 1002 than the second segment 1112. Along the first direction 001 and toward the first connection section 112, the size of the second segment 1112 decreases along the arrangement direction of the two first legs 111, to adapt to space formed by the brake disc 1002, thereby facilitating miniaturization of the electro-mechanical brake apparatus 100 in this application.

In an embodiment, along the arrangement direction of the two first legs 111, the first leg 111 includes a third side wall 1113 and a fourth side wall 1114 that face away from each other, and the third side wall 1113, the fourth side wall 1114, and the first connection section 112 are sequentially arranged. Along the sliding direction of the brake pad 31, an end face that is of the first leg 111 and that is away from the second leg 121 includes a weight reduction groove 1115. Along the arrangement direction of the two first legs 111, a distance between the weight reduction groove 1115 and the third side wall 1113 is less than or equal to a distance between the weight reduction groove 1115 and the fourth side wall 1114.

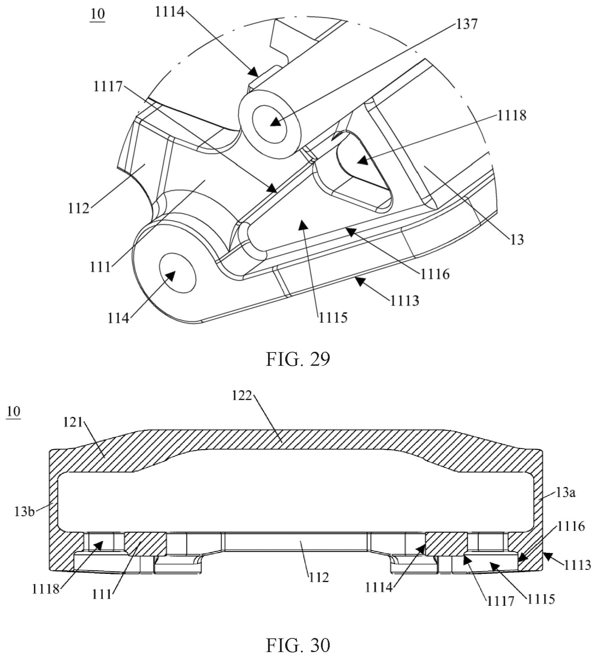

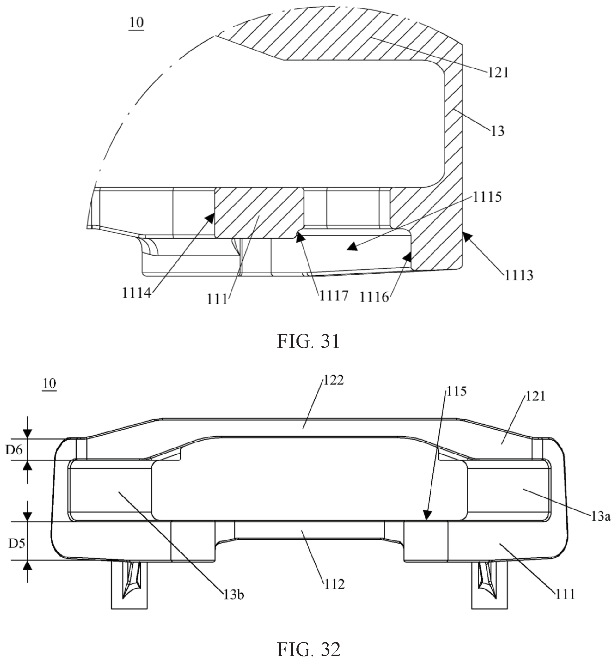

Refer to FIG. 29 to FIG. 31. FIG. 29 is a diagram of a partial outline structure of the first V-shaped frame 11 of the caliper bracket 10 in the electro-mechanical brake apparatus 100 according to an embodiment of this application. FIG. 30 is a cross-sectional view of the caliper bracket 10 in the electro-mechanical brake apparatus 100 according to an embodiment of this application. FIG. 31 is a partial cross-sectional view of the caliper bracket 10 in the electro-mechanical brake apparatus 100 according to an embodiment of this application. FIG. 30 and FIG. 31 are cross-sectional views formed based on a first cutting line L1 in FIG. 27.

As shown in FIG. 29 to FIG. 31, along the sliding direction of the brake pad 31, the weight reduction groove 1115 is recessed in a central region of the end surface that is of the first leg 111 and that is away from the second leg 121. Along the arrangement direction of the two first legs 111, the weight reduction groove 1115 includes a first weight reduction groove wall 1116 and a second weight reduction groove wall 1117 that are spaced apart from each other. The third side wall 1113, the first weight reduction groove wall 1116, the second weight reduction groove wall 1117, and the fourth side wall 1114 are sequentially arranged. The third side wall 1113 is configured to be connected to the first side wall 131 of the axial connection bridge 13. It may be understood that the first weight reduction groove wall 1116 and the third side wall 1113 are spaced apart from each other, to ensure connection strength between the first leg 111 and a side that is of the axial connection bridge 13 and on which the first side wall 131 is provided.

The fourth side wall 1114 is configured to be connected to the first connection section 112 and configured to be slidably connected to the first brake pad 311. In a working process of the electro-mechanical brake apparatus 100 in this application, the fourth side wall 1114 is further configured to abut against a side wall of the first brake pad 311. It may be understood that the second weight reduction groove wall 1117 and the fourth side wall 1114 are spaced from each other, to ensure structural strength of the first V-shaped frame 11.

In this embodiment of this application, a distance between the first weight reduction groove wall 1116 and the third side wall 1113 along the arrangement direction of the two first legs 111 is less than a distance between the second weight reduction groove wall 1117 and the fourth side wall 1114, so that in a working process of the electro-mechanical brake apparatus 100 in this application, structural strength of the first leg 111 facing a side of the brake pad 31 is increased, thereby ensuring the structural strength of the caliper bracket 10 and ensuring reliable braking of the electro-mechanical brake apparatus 100 in this application.

In another embodiment, the distance between the first weight reduction groove wall 1116 and the third side wall 1113 along the arrangement direction of the two first legs 111 is equal to the distance between the second weight reduction groove wall 1117 and the fourth side wall 1114. This is not particularly limited in this application.

It should be noted that the descriptions of the first axial connection bridge 13a in the foregoing embodiments may correspond to the descriptions of the second axial connection bridge 13b. Specifically, the second axial connection bridge 13b includes a first side wall and a second side wall that face away from each other. The first side wall of the second axial connection bridge 13b can correspond to the first side wall 131 of the first axial connection bridge 13a, and the second side wall of the second axial connection bridge 13b can correspond to the second side wall 132 of the second axial connection bridge 13b. Correspondingly, a shape of the second brake pad 312 and a shape of the second leg 121 may also respectively correspond to a shape of the first brake pad 311 and a shape of the first leg 111.

In other words, in the electro-mechanical brake apparatus 100 in this application, shapes of the first axial connection bridge 13a and the second axial connection bridge 13b are changed in the electro-mechanical brake apparatus 100 in this application. In this way, under different working conditions of the vehicle, eccentric wear of the brake pad 31 can be reduced, the pressure uniform distribution coefficient of the brake pad 31 is ensured, and reliable braking of the electro-mechanical brake apparatus 100 in this application is ensured.

In this way, based on limitations of the foregoing embodiments, the electro-mechanical brake apparatus 100 in this application is in transmission connection to the brake motor 50 and the transmission mechanism 41 through the gear set 62 of the reducer 60, to process driving force of the brake motor 50 and then transmit the processed driving force to the transmission mechanism 41. Then, based on a rotation connection between the ball screw 411 in the transmission mechanism 41 and the caliper body 20, the ball screw 411 can drive the two brake pads 31 to slide toward the brake disc 1002 while rotating, to brake the brake disc 1002, thereby implementing a braking function of the electro-mechanical brake apparatus 100 in this application.

In this application, the electro-mechanical brake apparatus 100 in this application further changes a shape of the first axial connection bridge 13a of the caliper bracket 10, and makes the first side wall 131 of the first axial connection bridge 13a closer to the first connection section 112 than the second side wall 132, to reduce equivalent moment exerted by the brake disc 1002 on the second V-shaped frame 12 in a working process of the electro-mechanical brake apparatus 100 in this application. This reduces a difference between the deformation of the first V-shaped frame 11 and the second V-shaped frame 12, and reduces leading-trailing eccentric wear of the brake pad 31. In this way, pressure distribution uniformity of the brake disc 1002 acting on the brake pad 31 is increased, the pressure uniform distribution coefficient of the brake pad 31 is increased, and reliable braking of the electro-mechanical brake apparatus 100 in this application is ensured.

The electro-mechanical brake apparatus 100 in this application adjusts a distance between the first side wall 131 of the first axial connection bridge 13a and the first connection section 112 and a distance between the second side wall 132 of the first axial connection bridge 13a and the first connection section 112, and makes the first side wall 131 closer to the first connection section 112 than the second side wall 132, to reduce the equivalent moment exerted by the brake disc 1002 on the second V-shaped frame 12 through the brake pad 31 during braking, thereby ensuring reliable braking of the electro-mechanical brake apparatus 100 in this application. When the electro-mechanical brake apparatus 100 in this application is used in the vehicle, the electro-mechanical brake apparatus 100 in this application can output driving force through the brake motor 50, and act on the brake disc 1002 through the reducer 60, the transmission mechanism 41, the piston 42, the caliper body 20, and the brake pads 31, to implement a braking function of the vehicle. A shape of the caliper bracket 10 of the electro-mechanical brake apparatus 100 ensures that the brake pad 31 does not experience leading-trailing eccentric wear due to deformation of the caliper bracket 10 in a working process of the vehicle. This ensures reliable braking of the electro-mechanical brake apparatus 100, so that braking effect of the vehicle is better, and use experience of the user is also improved.

The structure of the electro-mechanical brake apparatus 100 in this application is further applied to another usage scenario in which there is rotation motion and feed motion. For example, the structure of the electro-mechanical brake apparatus 100 is further applied to a steering system, a machine tool device, and the like. This is not particularly limited in this application. The first side wall 131 of the first axial connection bridge 13a of the electro-mechanical brake apparatus 100 in this application is closer to the first connection section 112 than the second side wall 132. In another usage scenario, the structure of the electro-mechanical brake apparatus 100 in this application can also ensure reliable braking.

In an embodiment, as shown in FIG. 29 to FIG. 31, the first leg 111 further includes a weight reduction hole 1118. Along the sliding direction of the brake pad 31, the weight reduction hole 1118 is located at a groove bottom of the weight reduction groove 1115. Along the sliding direction of the brake pad 31, the weight reduction hole 1118 penetrates the first leg 111, to further reduce a weight of the first leg 111.

In an embodiment, the first V-shaped frame 11 includes two positioning holes 114, the two positioning holes 114 are arranged at an interval along the arrangement direction of the two first legs 111, the two positioning holes 114 are configured to be fastened to the vehicle frame, and a distance between the two positioning holes 114 is less than or equal to a size of the first connection section 112. In the illustration shown in FIG. 27, along the first direction 001, the two positioning holes 114 are respectively provided at end portions that are of the two first legs 111 and that are away from the axial connection bridge 13. Along the first direction 001, the positioning holes 114, the first connection section 112, and the axial connection bridge 13 are sequentially arranged. In other words, along the first direction 001, one end of the first leg 111 is connected to a corresponding second leg 121 through the axial connection bridge 13, and the other end of the first leg 111 is fastened to the vehicle frame through the positioning hole 114. Middle segments of the two first legs 111 are connected through the first connection section 112.

The two positioning holes 114 are closer to the geometric axis of the brake disc 1002 than the first connection section 112. In this embodiment of this application, a distance between the two positioning holes 114 along the arrangement direction of the two first legs 111 is a third distance D3, and a size of the first connection section 112 along the arrangement direction of the first legs 111 is a fourth distance D4. The third distance D3 is less than the fourth distance D4, to adapt to a size of space of the brake disc 1002 close to the geometric axis of the brake disc 1002 while ensuring connection strength between the caliper bracket 10 and the vehicle frame, thereby facilitating miniaturization of the electro-mechanical brake apparatus 100 in this application. In another embodiment, the third distance D3 is equal to the fourth distance D4. This is not particularly limited in this application.

In an embodiment, along the sliding direction of the brake pad 31, a size of the first leg 111 is greater than or equal to a size of the second leg 121.

FIG. 32 is a bottom view of a structure of the caliper bracket 10 in the electro-mechanical brake apparatus 100 according to an embodiment of this application.

As shown in FIG. 32, a distance between two end faces that are of the first legs 111 and that face away from each other along the arrangement direction of the two first legs 111 is a fifth distance D5, and a distance between two end faces that are of the second legs 121 and that face away from each other is a sixth distance D6. The fifth distance D5 is greater than the sixth distance D6. Because the caliper bracket 10 is fastened to the vehicle frame only through the first V-shaped frame 11, correspondingly, the first V-shaped frame 11, the axial connection bridge 13, and the second V-shaped frame 12 that are connected along the sliding direction of the brake pad 31 form a structure similar to a cantilever beam structure. In this embodiment of this application, a second leg 121 having a small size is disposed along the sliding direction of the brake pad 31, so that a weight of the second V-shaped frame 12 can be reduced, thereby reducing bending moment formed by the second V-shaped frame 12 due to the self-weight. This avoids a phenomenon in which connection strength between the axial connection bridge 13 and the first V-shaped frame 11 is reduced because the second V-shaped frame 12 is excessively heavy. In this way, structural strength of the caliper bracket 10 is ensured, and reliable braking of the electro-mechanical brake apparatus 100 in this application is ensured.

In addition, a first leg 111 having a large size is disposed along the sliding direction of the brake pad 31, so that the structural strength of the first V-shaped frame 11 can be increased, and connection strength between the first V-shaped frame 11 and the vehicle frame can be increased, thereby ensuring the connection strength between the caliper bracket 10 and the vehicle frame, and further ensuring reliable braking of the electro-mechanical brake apparatus 100 in this application.

In another embodiment, the fifth distance D5 is equal to the sixth distance D6, to facilitate manufacturing of the caliper bracket 10.

In an embodiment, along the sliding direction of the brake pad 31, the first V-shaped frame 11 includes a first end face 115 facing the second V-shaped frame 12, and along the sliding direction of the brake pad 31, a projected area of the second V-shaped frame 12 on the first end face 115 is less than a surface area of the first end face 115. In other words, a volume of the second V-shaped frame 12 is less than a volume of the first V-shaped frame 11. The first V-shaped frame 11 having a large volume can improve the connection strength between the caliper bracket 10 and the vehicle frame, and ensure the structural strength of the caliper bracket 10, thereby ensuring reliable braking of the electro-mechanical brake apparatus 100 in this application.

In addition, the second V-shaped frame 12 having a small volume can reduce the weight of the second V-shaped frame 12, thereby reducing the bending moment formed by the second V-shaped frame 12 due to the self-weight. This avoids a phenomenon in which connection strength between the axial connection bridge 13 and the first V-shaped frame 11 is reduced because the second V-shaped frame 12 is excessively heavy. In this way, structural strength of the caliper bracket 10 is ensured, and reliable braking of the electro-mechanical brake apparatus 100 in this application is ensured.

In an embodiment, each of the two axial connection bridges 13 includes a mounting hole 137, the caliper body 20 includes two sliding holes 24, each mounting hole 137 is configured to mount a sliding rod 80, and each sliding rod 80 is configured to extend into the sliding hole 24, to implement a sliding connection between the caliper body 20 and the caliper bracket 10. A geometric axis of the sliding rod 80 coincides with a geometric axis of the sliding hole 24, and the geometric axis of the sliding hole 24 is parallel to the sliding direction of the brake pad 31, to ensure a contact area between the two brake pads 31 and the brake disc 1002 in a working process of the electro-mechanical brake apparatus 100 in this application, thereby ensuring the pressure uniform distribution coefficient of the brake pad 31 and ensuring reliable braking of the electro-mechanical brake apparatus 100 in this application.

In an embodiment, the first axial connection bridge 13a, the connection portion 23, and the second axial connection bridge 13b are sequentially arranged along the arrangement direction of the two first legs 111.

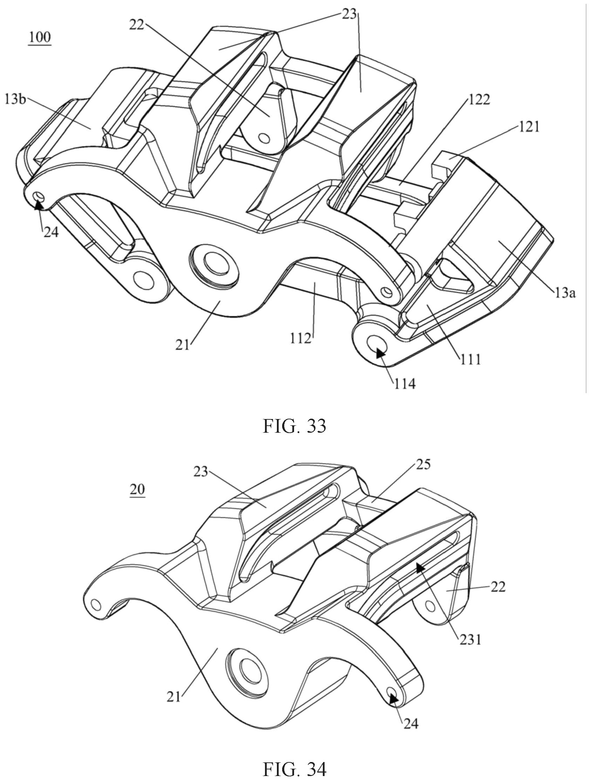

FIG. 33 is a diagram of another outline structure of the electro-mechanical brake apparatus 100 at the caliper body 20 according to an embodiment of this application.

As shown in FIG. 33, along the arrangement direction of the two first legs 111, the two axial connection bridges 13 are respectively arranged on two opposite sides of the connection portion 23, to reduce space occupied by the caliper body 20 along the arrangement direction of the two first legs 111, thereby facilitating miniaturization of the electro-mechanical brake apparatus 100 in this application. In addition, the connection portion 23 and the two axial connection bridges 13 are arranged in positions, so that in a working process of the electro-mechanical brake apparatus 100 in this application, the axial connection bridge 13 can be prevented from interfering with the connection portion 23 when displacement occurs under force exerted by the brake disc 1002 on the brake pad 31, thereby ensuring reliable braking of the electro-mechanical brake apparatus 100 in this application.

In addition, because the brake pad 31 is located between the first axial connection bridge 13a and the second axial connection bridge 13b along the arrangement direction of the two first legs 111, the connection portion 23 is disposed between the two axial connection bridges 13, so that the connection portion 23 is connected to the brake pad 31 through the claw portion 22. Meanwhile, this further facilitates ensuring abutment between the brake pad 31 and the brake disc 1002 and ensuring a contact area between the brake pad 31 and the brake disc 1002, the pressure uniform distribution coefficient of the brake pad 31 is increased, and reliable braking of the electro-mechanical brake apparatus 100 in this application is ensured.

In an embodiment, along the arrangement direction of the two first legs 111, a side wall on at least one side of the connection portion 23 includes a groove 231. The groove 231 extends toward the main body portion 21 or the claw portion 22 along the sliding direction of the brake pad 31. Along the sliding direction of the brake pad 31, an extension size of the groove 231 is greater than or equal to a distance between the main body portion 21 and the claw portion 22.

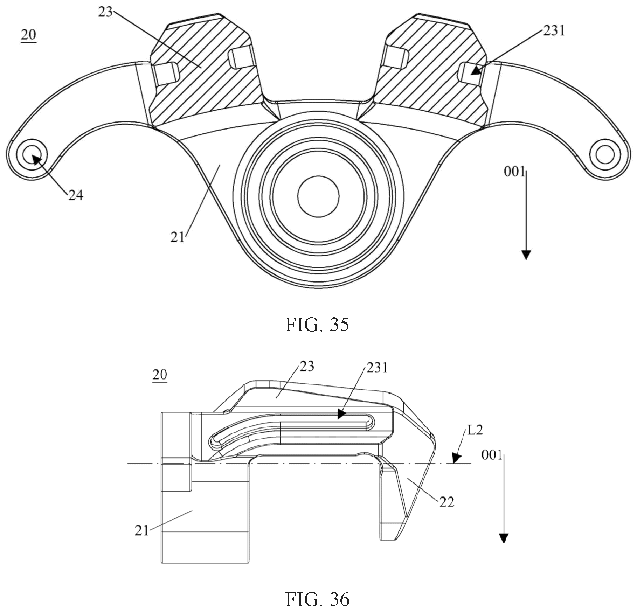

Refer to FIG. 34 and FIG. 35. FIG. 34 is a diagram of an outline structure of the caliper body 20 in the electro-mechanical brake apparatus 100 according to an embodiment of this application. FIG. 35 is a cross-sectional view of the caliper body 20 in the electro-mechanical brake apparatus 100 according to an embodiment of this application.

As shown in FIG. 34 and FIG. 35, side walls on two sides of the connection portion 23 along the arrangement direction of the two first legs 111 each include a groove 231. In the illustration shown in FIG. 30, the two grooves 231 are configured to cooperate to make the connection portion 23 form a structure similar to an I-shaped beam structure, to reduce a weight of the connection portion 23 and improve weight efficiency of the connection portion 23 while ensuring bending strength of the connection portion 23. The caliper body 20 is slidably connected to the caliper bracket 10 through the main body portion 21. In other words, along the sliding direction of the brake pad 31, the claw portion 22 and the connection portion 23 are configured to cooperate with the main body portion 21 to form a structure similar to a cantilever beam structure. It may be understood that a reduction in the weight of the connection portion 23 helps reduce bending moment of the caliper body 20, thereby ensuring structural strength of the caliper body 20 and ensuring reliable braking of the electro-mechanical brake apparatus 100 in this application.

Meanwhile, in a working process of the electro-mechanical brake apparatus 100 in this application, the claw portion 22 and the connection portion 23 along the sliding direction of the brake pad 31 are configured to cooperate with the main body portion 21 to form a structure similar to a cantilever beam structure. Self-weights of the connection portion 23 and the claw portion 22 cause the connection portion 23 and the claw portion 22 to twist toward the caliper bracket 10 relative to the main body portion 21, which may lead to uneven wear (that is, radial wear) along the first direction 001 between one end of the brake pad 31 close to the connection portion 23 and one end of the brake pad 31 away from the connection portion 23. In this way, provision of the groove 231 reduces the weight of the connection portion 23 and reduces the bending moment of the caliper body 20, thereby reducing radial eccentric wear of the brake pad 31, ensuring the pressure uniform distribution coefficient of the brake pad 31, and ensuring reliable braking of the electro-mechanical brake apparatus 100 in this application.

In addition, in a working process of the electro-mechanical brake apparatus 100 in this application, friction force exerted by the brake disc 1002 on the brake pad 31 can further cause the claw portion 22 to twist with the brake disc 1002. It may be understood that the connection portion 23 having the groove 231 is provided, so that bending strength of the connection portion 23 can be ensured while self-weight of the connection portion 23 is reduced, thereby ensuring bending strength of the connection portion 23. In this way, the structural strength of the caliper body 20 is ensured, and reliable braking of the electro-mechanical brake apparatus 100 in this application is ensured.

As shown in FIG. 36, along the sliding direction of the brake pad 31, one end of the groove 231 extends to a junction between the connection portion 23 and the claw portion 22, and the other end of the groove 231 extends to the main body portion 21, to ensure that a cross-sectional shape of the connection portion 23 at any position along the first direction 001 is formed as an I-shaped beam structure. This further reduces the weight of the connection portion 23, thereby further ensuring the structural strength of the caliper body 20 and ensuring reliable braking of the electro-mechanical brake apparatus 100 in this application.

For ease of description, in this embodiment of this application and subsequent embodiments, side walls on two opposite sides of the connection portion 23 along the arrangement direction of the two first legs 111 each include a groove 231. It may be understood that in some other embodiments, a side wall on one side of the connection portion 23 along the arrangement direction of the two first legs 111 includes a groove 231. This is not particularly limited in this application.

In an embodiment, a cross-sectional area of the claw portion 22 decreases along the sliding direction of the brake pad 31 and in a direction away from the main body portion 21.

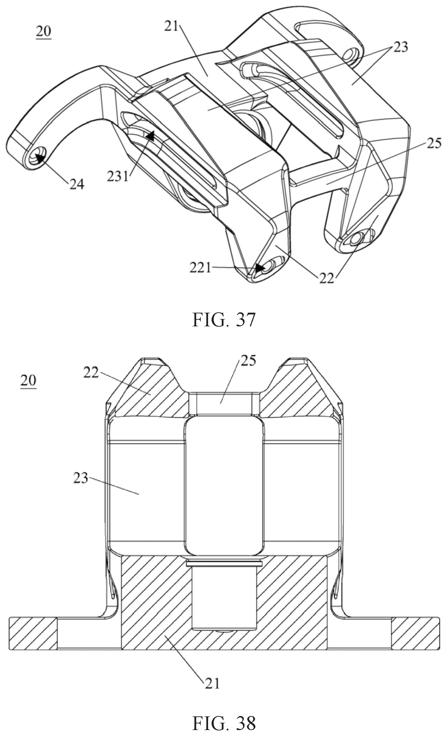

Refer to FIG. 37 and FIG. 38. FIG. 37 is a diagram of another outline structure of the caliper body 20 in the electro-mechanical brake apparatus 100 according to an embodiment of this application. FIG. 38 is another cross-sectional view of the caliper body 20 in the electro-mechanical brake apparatus 100 according to an embodiment of this application. FIG. 38 is a cross-sectional view formed based on a second cutting line L2 in FIG. 36.

As shown in FIG. 37 and FIG. 38, a cross-sectional shape of the claw portion 22 is a trapezoid, and a cross-sectional area of a side that is of the claw portion 22 and that is close to the main body portion 21 along the sliding direction of the brake pad 31 is large, to reduce a weight of the claw portion 22 and improve weight efficiency of the claw portion 22 while ensuring a contact area between the claw portion 22 and the brake pad 31 and ensuring bending strength of the claw portion 22. The caliper body 20 is slidably connected to the caliper bracket 10 through the main body portion 21. In other words, along the sliding direction of the brake pad 31, the claw portion 22 and the connection portion 23 are configured to cooperate with the main body portion 21 to form a structure similar to a cantilever beam structure. It may be understood that a reduction in the weight of the claw portion 22 helps reduce bending moment of the caliper body 20, thereby ensuring structural strength of the caliper body 20 and ensuring reliable braking of the electro-mechanical brake apparatus 100 in this application.

Meanwhile, in a working process of the electro-mechanical brake apparatus 100 in this application, the claw portion 22 and the connection portion 23 along the sliding direction of the brake pad 31 are configured to cooperate with the main body portion 21 to form a structure similar to a cantilever beam structure. Self-weights of the connection portion 23 and the claw portion 22 cause the connection portion 23 and the claw portion 22 to twist toward the caliper bracket 10 relative to the main body portion 21, which may lead to uneven wear (that is, radial wear) along the first direction 001 between one end of the brake pad 31 close to the connection portion 23 and one end of the brake pad 31 away from the connection portion 23. In this way, the claw portion 22 with a trapezoidal cross-sectional shape reduces the bending moment of the caliper body 20, thereby reducing radial eccentric wear of the brake pad 31, ensuring the pressure uniform distribution coefficient of the brake pad 31, and ensuring reliable braking of the electro-mechanical brake apparatus 100 in this application.

In an embodiment, there are two connection portions 23 and two claw portions 22. Along the sliding direction of the brake pad 31, each claw portion 22 is connected to the main body portion 21 through one of the connection portions 23. The two claw portions 22 are spaced apart from each other along the arrangement direction of the two first legs 111. In the illustration shown in FIG. 29, an end portion that is of the second brake pad 312 and that is away from the first brake pad 311 along the sliding direction of the brake pad 31 is configured to abut against the two claw portions 22, and the two claw portions 22 are spaced apart from each other along the arrangement direction of the two legs 111, to increase a contact area between the claw portion 22 and the second brake pad 312, and improve connection stability between the caliper body 20 and the second brake pad 312. This avoids a phenomenon in which the second brake pad 312 is subjected to uneven force and causes deviation and clamping stagnation of the second brake pad 312 due to use of a single claw portion 22 in a working process of the electro-mechanical brake apparatus 100 in this application.

In other words, the two claw portions 22 are provided to ensure sliding stability of the second brake pad 312 in a working process of the electro-mechanical brake apparatus 100 in this application. This further ensures reliable braking of the electro-mechanical brake apparatus 100 in this application. Meanwhile, provision of the two claw portions 22 can further improve force uniformity of the second brake pad 312 when the second brake pad 312 is in contact with the brake disc 1002, thereby improving a service life of the second brake pad 312, and ensuring reliable braking of the electro-mechanical brake apparatus 100 in this application.

In addition, in a working process of the electro-mechanical brake apparatus 100 in this application, a region of the brake pad 31, corresponding to a connection region between the claw portion 22 and the brake pad 31 and facing the brake disc 1002, is subjected to higher pressure from the brake disc 1002, and this region typically exhibits greater wear. It may be understood that provision of the two claw portions 22 can further reduce wear (that is, convex-concave wear) in a central region of the brake pad 31, thereby ensuring wear uniformity of the brake pad 31 and ensuring the pressure uniform distribution coefficient of the brake pad 31. In this way, reliable braking of the electro-mechanical brake apparatus 100 in this application is ensured.

In an embodiment, the caliper body 20 further includes a third connection section 25. The third connection section 25 is connected between the two claw portions 22 along the arrangement direction of the two first legs 111. Along the sliding direction of the brake pad 31, the third connection section 25 is located on a side that is of the second brake pad 312 and that is away from the first brake pad 311. The third connection section 25 is spaced apart from the second brake pad 312. In a working process of the electro-mechanical brake apparatus 100 in this application, the third connection section 25 is configured to balance bending moment and torque applied to the two claw portions 22, thereby improving structural strength of the caliper body 20 and ensuring reliable braking of the electro-mechanical brake apparatus 100 in this application.

In another embodiment, the caliper body 20 further includes a third connection section 25. The third connection section 25 is connected to the two connection portions 23 along the arrangement direction of the two first legs 111. Along the first direction 001, the third connection section 25 is spaced apart from the first brake pad 311 and the second brake pad 312.

In an embodiment, each claw portion 22 includes a connection hole 221. The connection hole 221 is configured to be connected to the second brake pad 312. A minimum distance between the first connection section 112 and a central connection line between connection holes 221 of the two claw portions 22 is greater than or equal to the minimum distance between the first side wall 131 and the first connection section 112.

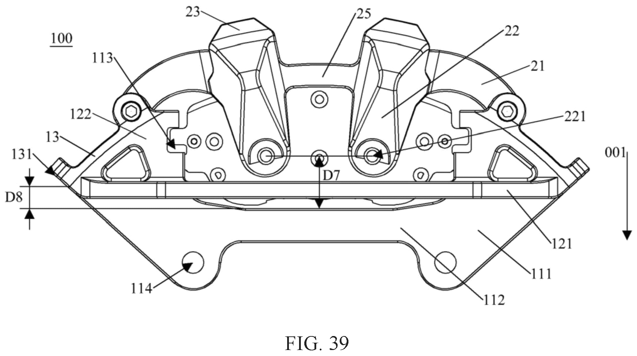

FIG. 39 is a front view of a structure of the electro-mechanical brake apparatus 100 at the caliper body 20 according to an embodiment of this application. To facilitate reflection of a position of the connection hole 221, the brake pad 31 is omitted in FIG. 36.

As shown in FIG. 39, each claw portion 22 is fastened to the second brake pad 312 through one connection hole 221, so that in a working process of the electro-mechanical brake apparatus 100 in this application, the second brake pad 312 is pushed to slide toward or away from the brake disc 1002. It may be understood that, in a working process of the electro-mechanical brake apparatus 100 in this application, a part of the force exerted by the brake disc 1002 on the second brake pad 312 is transferred to the caliper bracket 10 through abutment between the second brake pad 312 and the second leg 121, and the other part may be transferred to the caliper body 20 through the two claw portions 22. In this way, deformation of the caliper bracket 10 is reduced, and reliable braking of the electro-mechanical brake apparatus 100 in this application is ensured.

In a working process of the electro-mechanical brake apparatus 100 in this application, along the first direction 001, an angular displacement at an end that is of the brake pad 31 and that is away from the first connection section 112 is greater than an angular displacement at an end that is of the brake pad 31 and that is close to the first connection section 112. In this embodiment of this application, the minimum distance between the first connection section 112 and the central connection line between the connection holes 221 of the two claw portions 22 is a seventh distance D7, and the minimum distance between the first side wall 131 and the first connection section 112 is an eighth distance D8. The seventh distance D7 is greater than the eighth distance D8. In other words, along the first direction 001, the central connection line between the two connection holes 221 is farther away from the first connection section 112 than the first side edge 1341 of the first side wall 131, and the two claw portions 22 are fastened to the brake pad 31 through the two connection holes 221. In this way, in a working process of the electro-mechanical brake apparatus 100 in this application, an angular displacement of the second brake pad 312 is reduced by using the caliper body 20, thereby reducing force exerted by the brake disc 1002 on the second V-shaped frame 12 through the second brake pad 312. In this way, the structural strength of the second V-shaped frame 12 is reduced, and reliable braking of the electro-mechanical brake apparatus 100 in this application is ensured. In another embodiment, the seventh distance D7 is equal to the eighth distance D8. This is not particularly limited in this application.

It is clear that a person skilled in the art can make various modifications and variations to this application without departing from the scope of this application. In this way, if these modifications and variations to this application fall within the scope of the claims of this application and equivalent technologies thereof, this application is also intended to include these modifications and variations.

## Claims

1. An electro-mechanical brake apparatus, wherein the electro-mechanical brake apparatus comprises a caliper bracket, a caliper body, a brake motor, a transmission mechanism, and two brake pads; the caliper bracket is configured to be connected to the caliper body and configured to mount the two brake pads; the caliper body is configured to be fastened to the brake motor and configured to accommodate the transmission mechanism; and the brake motor is configured to drive, through the transmission mechanism, the two brake pads to slide, to brake a brake disc of a vehicle;
the caliper bracket comprises a first V-shaped frame and a second V-shaped frame; the first V-shaped frame and the second V-shaped frame are respectively arranged on two sides of the brake disc along a sliding direction of the brake pad; the first V-shaped frame is configured to be fastened to a vehicle frame; one of the two brake pads is mounted between two first legs of the first V-shaped frame and the other of the two brake pads is mounted between two second legs of the second V-shaped frame; the two first legs are connected through a first connection section; and a surface of one of the first legs is configured to be fastened to a corresponding one of the second legs through one axial connection bridge; and
along an arrangement direction of the two first legs, one of axial connection bridges comprises a first side wall and a second side wall that face away from each other; along the arrangement direction of the two first legs, the first side wall, the second side wall, and the other of the axial connection bridges are sequentially arranged; along a first direction, a minimum distance between the first side wall and the first connection section is less than a minimum distance between the second side wall and the first connection section; and the first direction is perpendicular to both the arrangement direction of the two first legs and the sliding direction of the brake pad.

2. The electro-mechanical brake apparatus according to claim 1, wherein a distance between a center of the brake pad between the two first legs and the first connection section along the first direction is greater than or equal to a maximum distance between the first side wall and the first connection section.

3. The electro-mechanical brake apparatus according to claim 2, wherein one of the first leg connected to the axial connection bridge and the brake pad comprises a protrusion, the other of the first leg connected to the axial connection bridge and the brake pad comprises a slide groove, and along the arrangement direction of the two first legs, the protrusion is configured to be embedded in the slide groove, to be slidably connected to the brake pad and the caliper bracket; and
along the first direction, the axial connection bridge comprises a connection surface facing the first connection section, the connection surface intersects with the first side wall to form a first side edge, and the connection surface intersects with the second side wall to form a second side edge, wherein
the second side edge, the slide groove, and the first side edge are sequentially arranged along the first direction.

4. The electro-mechanical brake apparatus according to any one of claims 1 to 3, wherein along the first direction, the axial connection bridge comprises a second connection surface that faces away from the first connection section, a middle segment of the second connection surface is arc-shaped along the arrangement direction of the two first legs, and a curvature of the middle segment of the second connection surface is greater than or equal to a curvature of the brake disc; and
the second connection surface comprises two spaced edge regions along the arrangement direction of the two first legs, one of the two edge regions is connected to the first side wall, the other of the two edge regions is connected to the second side wall, and along the first direction, each of the edge regions comprises a protruding portion extending in a direction away from the first connection section.

5. The electro-mechanical brake apparatus according to any one of claims 1 to 4, wherein a surface area of the first side wall is greater than or equal to a surface area of the second side wall, wherein
along the arrangement direction of the two first legs, a cross-sectional area of a middle segment of the axial connection bridge is less than or equal to the surface area of the first side wall; or along the arrangement direction of the two first legs, the cross-sectional area of the middle segment of the axial connection bridge is less than or equal to the surface area of the second side wall.

6. The electro-mechanical brake apparatus according to any one of claims 1 to 5, wherein along the first direction, the first leg comprises a first segment and a second segment that are connected, the first segment is connected to the axial connection bridge, and the second segment is connected to the first connection section, wherein
along the first direction and toward a direction of the first connection section, a size of the second segment decreases along the arrangement direction of the two first legs.

7. The electro-mechanical brake apparatus according to any one of claims 1 to 6, wherein along the arrangement direction of the two first legs, the first leg comprises a third side wall and a fourth side wall that face away from each other, and the third side wall, the fourth side wall, and the first connection section are sequentially arranged; and
along the sliding direction of the brake pad, an end face that is of the first leg and that is away from the second leg comprises a weight reduction groove, and along the arrangement direction of the two first legs, a distance between the weight reduction groove and the third side wall is less than or equal to a distance between the weight reduction groove and the fourth side wall.

8. The electro-mechanical brake apparatus according to any one of claims 1 to 7, wherein the first V-shaped frame comprises two positioning holes, the two positioning holes are arranged at an interval along the arrangement direction of the two first legs, the two positioning holes are configured to be fastened to the vehicle frame, and a distance between the two positioning holes is less than or equal to a size of the first connection section.

9. The electro-mechanical brake apparatus according to any one of claims 1 to 8, wherein a size of the first leg is greater than or equal to a size of the second leg along the sliding direction of the brake pad.

10. The electro-mechanical brake apparatus according to any one of claims 1 to 9, wherein along the sliding direction of the brake pad, the first V-shaped frame comprises a first end face facing the second V-shaped frame, and along the sliding direction of the brake pad, a projected area of the second V-shaped frame on the first end face is less than a surface area of the first end face.

11. The electro-mechanical brake apparatus according to any one of claims 1 to 10, wherein along the sliding direction of the brake pad, the caliper body comprises a main body portion, a connection portion, and a claw portion that are sequentially connected, the main body portion is configured to accommodate the transmission mechanism and configured to mount one of the brake pads, and a surface that is of the claw portion and that faces the main body portion is configured to enclose the other of the brake pads, wherein
the main body portion, the first V-shaped frame, the second V-shaped frame, and the claw portion are sequentially arranged along the sliding direction of the brake pad; and
the axial connection bridge, the connection portion, and the other axial connection bridge are sequentially arranged along the arrangement direction of the two first legs.

12. The electro-mechanical brake apparatus according to claim 11, wherein along the arrangement direction of the two first legs, a side wall on at least one side of the connection portion comprises a groove; the groove extends toward the main body portion or the claw portion along the sliding direction of the brake pad; and along the sliding direction of the brake pad, an extension size of the groove is greater than or equal to a distance between the main body portion and the claw portion.

13. The electro-mechanical brake apparatus according to claim 11, wherein a cross-sectional area of the claw portion decreases along the sliding direction of the brake pad and toward a direction away from the main body portion.

14. The electro-mechanical brake apparatus according to any one of claims 11 to 13, wherein there are two connection portions and two claw portions; along the sliding direction of the brake pad, each claw portion is connected to the main body portion through one of the connection portions; and the two claw portions are spaced apart from each other along the arrangement direction of the two first legs; and
each claw portion comprises a connection hole; the connection hole is configured to be connected to the brake pad; and a minimum distance between the first connection section and a central connection line between connection holes of the two claw portions is greater than or equal to the minimum distance between the first side wall and the first connection section.

15. A vehicle, comprising:
a plurality of wheels; and
a plurality of electro-mechanical brake apparatuses according to any one of claims 1 to 14, wherein each electro-mechanical brake apparatus is configured to brake one wheel.
